# EUROPEAN PATENT SPECIFICATION

(11) **EP 3 606 188 B1**
(45) Date of publication and mention of the grant of the patent: **17.05.2023**
(21) Application number: 18770643.7
(22) Date of filing: 12.03.2018
(51) Int. Cl.: H04L 5/00

(54) **POWER STATE CONVERSION METHOD, TERMINAL, STORAGE MEDIUM AND PROCESSOR**
VERFAHREN ZUR LEISTUNGSZUSTANDSUMWANDLUNG, ENDGERÄT, SPEICHERMEDIUM UND PROZESSOR
PROCÉDÉ DE CONVERSION D'ÉTAT DE PUISSANCE, TERMINAL, SUPPORT DE STOCKAGE, ET PROCESSEUR

(30) Priority: 24.03.2017 CN 201710184652
(43) Date of publication of application: 05.02.2020
(73) Proprietor: ZTE Corporation, Shenzhen, Guangdong 518057 (CN)
(72) Inventor: REN, Min, Shenzhen Guangdong 518057 (CN); XIA, Shuqiang, Shenzhen Guangdong 518057 (CN); HAN, Xianghui, Shenzhen Guangdong 518057 (CN); ZHANG, Wen, Shenzhen Guangdong 518057 (CN); SHI, Jing, Shenzhen Guangdong 518057 (CN)
(74) Representative: Aipex B.V.
(86) International application number: PCT/CN2018/078755
(87) International publication number: WO 2018/171462

(56) References cited:
- EP-A2- 2 519 886
- WO-A1-2013/101681
- CN-A- 1 848 703
- CN-A- 101 072 420
- "3rd Generation Partnership Project; Technical Specification Group Radio Access Network; Evolved Universal Terrestrial Radio Access (E-UTRA); User Equipment (UE) radio transmission and reception (Release 14)", 3GPP STANDARD; 3GPP TS 36.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. V14.1.0, 12 October 2016 (2016-10-12), pages 25-338, XP051173079, [retrieved on 2016-10-12]
- "3GPP TSG RAN WG4, User Equipment(UE) radio transmission and reception (Release14)", 3GPP TSG RAN#73, TS 36.101, no. V14. 1. 0, 11 January 2017 (2017-01-11), pages 1-24, XP051173078,

## Description

### TECHNICAL FIELD

The present disclosure relates to the field of communications and, in particular, to a power state conversion method, a terminal, a storage medium and a processor.

### BACKGROUND

In a new generation mobile communication system, new radio (NR), that is, the fifth generation mobile communication technology (5G), system networking will be implemented at a carrier frequency higher than a carrier frequency used in 2G, 3G and 4G systems. Currently, frequency bands widely recognized by the industry and international organizations are mainly at 3 GHz to 6 GHz and 6 GHz to 100 GHz. These frequency bands basically belong to a centimeter waveband and a millimeter waveband. 5G will support a higher rate (Gbps), massive links (1M/Km2), an ultra-low latency (1ms), higher reliability, hundredfold energy efficiency improvement and the like to support new requirement changes. The index of the ultra-low latency in a 5G system is currently recognized as 1ms for a user plane latency.

One method for effectively implementing the ultra-low latency is to reduce a transmission time interval (TTI) of a long term evolution (LTE) system to reduce a latency of a unidirectional link in multiples, so as to support the feature requirement of 1ms for an air-interface latency. Currently, there are two methods for reducing the TTI. One is to expand subcarrier spacing of an orthogonal frequency division multiplexing (OFDM) system to reduce the duration of a single OFDM symbol, and the cases where the subcarrier spacing currently being studied is from 15KHz, 30KHz, 60KHz, 75KHz, 120KHz up to 240KHz, etc., or less than 15KHz, may exist. The one method is related to in both a 5G high-frequency communication system and a super-dense network. Another method is to reduce the number of OFDM symbols in a single TTI to reduce the length of TTI, as discussed in the 3rd generation partnership project (3GPP), for example, to shorten the TTI to 1 to 7 OFDM symbols or to shorten the TTI to the length of a single-carrier frequency-division multiple access (SC-FDMA) symbol, but the subcarrier spacing keeps 15KHz. The other method has the advantage of being completely compatible with an existing LTE system.

In the existing LTE system, a transmit power state conversion duration of a user terminal transmitter includes a conversion process of transmitter power from an off state to an on state (the process takes about 20µs) and a conversion process of the transmitter power from the on state to the off state (the process takes about 20µs). As the length of the TTI decreases, especially when the TTI is equal to one symbol, that is 1/14ms, 40 µs takes up approximately 60% of the duration of the TTI. Moreover, when a sounding reference signal (SRS) and a demodulation reference signal (DMRS) as well as data are transmitted continuously to the same user, how to determine a conversion process and what kind of power conversion duration should be adopted to satisfy the requirement of an appropriate ultra-low delay scenario are urgent problems to be solved.

In addition, three general application scenarios of 5G include enhanced mobile broadband (eMBB), massive machine type communication (mMTC) and ultra-reliable and low latency communications (URLLC). Considering that the frequency of URLLC traffic is much lower than the frequency of eMBB traffic, and once the URLLC traffic is performed, a large system bandwidth is occupied, and therefore, it is necessary to implement a method in which the URLLC traffic and the eMBB traffic are frequency-division multiplexed to coexist. However, how to determine the conversion process and what kind of power conversion duration should be adopted when two types of traffic are multiplexed are also urgent problems to be solved.

3GPP TS 36.101, MOBIL COMPETENCE CENTRE; 650, ROUTE DESLUCIOLES; F-06921 SOPHIA-ANTIPOLIS CEDEX; FRANCE, vol. RAN WG5, no. V14.1.0, 12 October 2016, XP051173079, discloses the minimum RF characteristics and minimum performance requirements for E-UTRA user equipment.

### SUMMARY

Embodiments of the present disclosure provide a power state conversion method and apparatus, a terminal, a storage medium and a processor.

The invention is set out in the appended set of claims.

### BRIEF DESCRIPTION OF DRAWINGS

The drawings described herein are used to provide a further understanding of the present disclosure, and form a part of the present application. The exemplary embodiments and descriptions thereof in the present disclosure are used to explain the present disclosure. In the drawings:
FIG. 1 is a hardware-structure block diagram of a mobile terminal of a power state conversion method according to an embodiment of the present disclosure;
FIG. 2 is a flowchart of a power state conversion method according to an embodiment of the present disclosure;
FIG. 3 is a structural block diagram of a power state conversion apparatus;
FIG. 4 is a structural block diagram of a terminal according to an embodiment of the present disclosure.
FIG. 5a is a schematic diagram of a time pattern for transmit power state conversion when a sounding reference signal is adjacent to a data signal in the time domain according to application embodiment one of the present disclosure;
FIG. 5b is a schematic diagram of a time pattern for transmit power state conversion when a sounding reference signal is adjacent to a data signal in the time domain according to application embodiment two of the present disclosure;
FIG. 5c is a schematic diagram of a time pattern for transmit power state conversion when a sounding reference signal is adjacent to a data signal in the time domain according to application embodiment three of the present disclosure;
FIG. 6a is a schematic diagram of a time pattern for transmit power state conversion when a sounding reference signal is adjacent to a control signal in the time domain according to application embodiment five of the present disclosure;
FIG. 6b is a schematic diagram of a time pattern for transmit power state conversion when a sounding reference signal is adjacent to a control signal in the time domain according to application embodiment six of the present disclosure;
FIG. 6c is a schematic diagram of a time pattern for transmit power state conversion when a sounding reference signal is adjacent to a control signal in the time domain according to application embodiment seven of the present disclosure;
FIG. 6d is a schematic diagram of a time pattern for transmit power state conversion when a sounding reference signal is adjacent to a control signal in the time domain according to application embodiment eight of the present disclosure;
FIG. 6e is a schematic diagram of a time pattern for transmit power state conversion when a sounding reference signal is adjacent to a control signal in the time domain according to application embodiment nine of the present disclosure;
FIG. 6f is a schematic diagram of a time pattern for transmit power state conversion when a sounding reference signal is adjacent to a control signal in the time domain according to application embodiment ten of the present disclosure;
FIG. 6g is a schematic diagram of a time pattern for transmit power state conversion when a sounding reference signal is adjacent to a control signal in the time domain according to application embodiment eleven of the present disclosure;
FIG. 7 is a schematic diagram of a time pattern for transmit power state conversion when the end of the transmission time interval for eMBB is punctured for URLLC or the eMBB stops and waits for transmission at the end of the transmission time interval due to the URLLC according to application embodiment fourteen of the present disclosure;
FIG. 8 is a schematic diagram of a time pattern for transmit power state conversion when the start of the transmission time interval for eMBB is punctured for URLLC or the eMBB stops and waits for transmission at the start of the transmission time interval due to the URLLC according to application embodiment fifteen of the present disclosure;
FIG. 9 is a schematic diagram of a time pattern for transmit power state conversion when the middle of the transmission time interval for eMBB is punctured for URLLC or the eMBB stops and waits for transmission at the middle of the transmission time interval due to URLLC according to application embodiment sixteen of the present disclosure;
FIG. 10 is a schematic diagram of a time pattern for transmit power state conversion when both URLLC and eMBB are transmitted at the end of the transmission time interval for the eMBB according to application embodiment seventeen of the present disclosure;
FIG. 11 is a schematic diagram of a time pattern for transmit power state conversion when both URLLC and eMBB are transmitted at the start of the transmission time interval for the eMBB according to application embodiment eighteen of the present disclosure;
FIG. 12 is a schematic diagram of a time pattern for transmit power state conversion when both URLLC and eMBB are transmitted at the middle of the transmission time interval for the eMBB according to application embodiment nineteen of the present disclosure;
FIG. 13 is a schematic diagram of a time pattern for transmit power state conversion when URLLC has the same transmission time interval as eMBB and at the last TTI for eMBB transmission, eMBB puncturing is performed or the eMBB stops and waits for transmission according to application embodiment twenty of the present disclosure; and
FIG. 14 is a schematic diagram of a time pattern for transmit power state conversion when URLLC has the same transmission time interval as eMBB and the eMBB and the URLLC are transmitted simultaneously at the last TTI for the eMBB transmission according to application embodiment twenty-one of the present disclosure.

### DETAILED DESCRIPTION

Hereinafter the present disclosure will be described in detail with reference to the drawings and in conjunction with embodiments. It is to be illustrated that if not in collision, the embodiments and features therein in the present disclosure may be combined with each other.

It is to be illustrated that the terms "first", "second" and the like in the description, claims and above drawings of the present invention are used to distinguish between similar objects and are not necessarily used to describe a particular order or sequence.

### Embodiment one

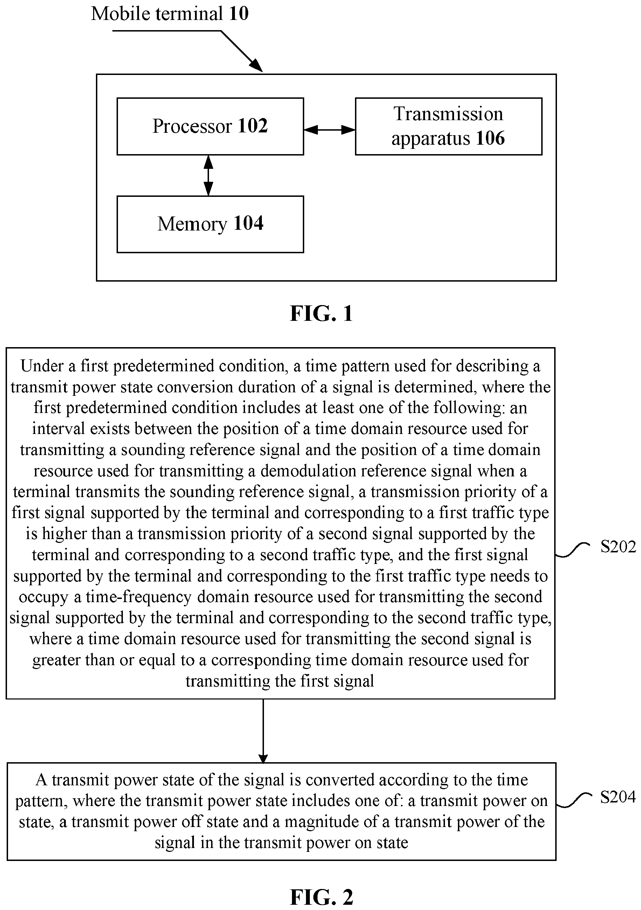

The method embodiment provided by embodiment one of the present disclosure may be performed on a mobile terminal, a computer terminal or other similar computing devices. The method to be performed on the mobile terminal is taken as an example. FIG. 1 is a hardware-structure block diagram of the mobile terminal of a power state conversion method according to the embodiment of the present disclosure. As shown in FIG. 1, a mobile terminal 10 may include one or more (only one is shown in FIG. 1) processors 102 (the processors 102 may include, but are not limited to, a processing apparatus such as a microcontroller unit (MCU), a field programmable gate array (FPGA)) and the like, a memory 104 configured to store data, and a transmission apparatus 106 configured to implement a communication function. It should be understood by those skilled in the art that the structure shown in FIG. 1 is merely illustrative, and not intended to limit the structure of the electronic apparatus described above. For example, the mobile terminal 10 may further include more or fewer components than the components shown in FIG. 1, or may have a configuration different from the configuration shown in FIG. 1.

The memory 104 may be configured to store software programs of application software, and modules, such as program instructions/modules corresponding to the power state conversion method in the embodiments of the present disclosure. The processor 102 executes the software programs and modules stored in the memory 104 to perform functional applications and data processing, that is, to perform the method described above. The memory 104 may include a highspeed random access memory, and may further include a nonvolatile memory such as one or more magnetic storage apparatus, flash memories or other nonvolatile solid-state memories. In some examples, the memory 104 may further include memories that are remotely disposed with respect to the processors 102. These remote memories may be connected to the mobile terminal 10 via a network. Examples of the above network include, but are not limited to, the Internet, an intranet, a local area network, a mobile communication network and a combination thereof.

The transmission apparatus 106 is configured to receive or transmit data via a network. Specific examples of the preceding network may include a wireless network provided by a communication provider of the mobile terminal 10. In one example, the transmission device 106 includes a network interface controller (NIC), which may be connected to other network devices via a base station, thereby communicating with the Internet. In one example, the transmission apparatus 106 may be a radio frequency (RF) module, which is configured to communicate with the Internet in a wireless way.

This embodiment provides a power state conversion method performed on the mobile terminal described above. FIG. 2 is a flowchart of the power state conversion method according to the embodiment of the present disclosure. As shown in FIG. 2, the method includes the steps described below.

In step S202, under a first predetermined condition, a time pattern used for describing a transmit power state conversion duration of a signal is determined, where the first predetermined condition includes at least one of the following: an interval exists between the position of a time domain resource used for transmitting a sounding reference signal and the position of a time domain resource used for transmitting a demodulation reference signal when a terminal transmits the sounding reference signal, a transmission priority of a first signal corresponding to a first traffic type supported by the terminal is higher than a transmission priority of a second signal corresponding to a second traffic type supported by the terminal, and the first signal corresponding to the first traffic type supported by the terminal needs to occupy a time-frequency domain resource used for transmitting the second signal corresponding to the second traffic type supported by the terminal, where a time domain resource used for transmitting the second signal is greater than or equal to a corresponding time domain resource used for transmitting the first signal.

In step S204, a transmit power state of the signal is converted according to the time pattern, where the transmit power state includes one of: a transmit power on state, a transmit power off state and a magnitude of a transmit power of the signal in the transmit power on state.

Through the above steps, in the case where the first predetermined condition includes at least one of the following: the interval exists between the position of the time domain resource used for transmitting the sounding reference signal and the position of the time domain resource used for transmitting the demodulation reference signal when the terminal transmits the sounding reference signal, the transmission priority of the first signal corresponding to the first traffic type supported by the terminal is higher than the transmission priority of the second signal corresponding to the second traffic type supported by the terminal, and the first signal corresponding to the first traffic type supported by the terminal needs to occupy the time-frequency domain resource used for transmitting the second signal corresponding to the second traffic type supported by the terminal, the time pattern of the signal can be determined; and then the transmit power state of the signal is converted according to the time pattern. That is, in the case of a short TTI, the corresponding time pattern may be determined according to the condition that the interval exists between the position of the time domain resource used for transmitting the sounding reference signal and the position of the time domain resource used for transmitting the demodulation reference signal when the terminal transmits the sounding reference signal, or the corresponding time pattern may be determined according to a relationship between traffic types in the case of multiplexing of at least two types of traffic; and then the transmit power state of the corresponding signal is converted according to the time pattern. Therefore, this can solve the problem where the transmit power conversion of the signal cannot be implemented in the short TTI or in the case of multiplexing of at least two types of traffic in the related art, thereby reducing the effect on the transmission time of useful signals.

It is to be illustrated the action of converting the transmit power state of the signal according to the time pattern may take, but not limited to, at least one of the following forms: converting from the transmit power on state to the transmit power off state according to the time pattern, converting from the transmit power off state to the transmit power on state according to the time pattern, and converting from one transmit power of the signal in the transmit power on state to another transmit power of the signal in the transmit power on state according to the time pattern.

It is to be illustrated that the above-mentioned first predetermined condition may be acquired from a network-side device, for example, may be acquired from predefined information of a system, or may be acquired from configuration information on a network side, but is not limited thereto.

It is to be illustrated that before the above-mentioned step S202, the above-mentioned method further includes that a second predetermined condition is determined.

In one embodiment of the present disclosure, in the case where the first predetermined condition is that the interval exists between the position of the time domain resource used for transmitting the sounding reference signal and the position of the time domain resource used for transmitting the demodulation reference signal when the terminal transmits the sounding reference signal, the above-mentioned second predetermined condition includes at least one of the following: the position of the time domain resource used for transmitting the sounding reference signal is adjacent to the position of a time domain resource used for transmitting a data signal, and the position of the time domain resource used for transmitting the sounding reference signal is adjacent to the position of a time domain resource used for transmitting a control signal.

It is to be illustrated that in the case where the second predetermined condition is that the position of the time domain resource used for transmitting the sounding reference signal is adjacent to the position of the time domain resource for transmitting the data signal, the determined time pattern of the sounding reference signal includes at least one of the following: the ending time of a first transmit power state conversion duration of the sounding reference signal is before the starting time of a symbol used for transmitting the sounding reference signal, and the starting time of a second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state, from a first transmit power of the sounding reference signal to a second transmit power of the sounding reference signal. The second transmit power state conversion duration is a duration for converting from the transmit power on state to the transmit power off state or a duration for converting, in the transmit power on state, from a third transmit power of the sounding reference signal to a fourth transmit power of the sounding reference signal. That is, when the sounding reference signal and the data signal are adjacent to each other in the time domain, the first transmit power state conversion duration and/or the second transmit power state conversion duration are located outside the symbol on which the sounding reference signal is transmitted, so that the effect on the integrity of the sounding reference signal transmission can be reduced.

It is to be illustrated that the third transmit power may be the same as or different from the first transmit power or the second transmit power, and the fourth transmit power may be the same as or different from the first transmit power or the second transmit power.

It is to be illustrated that the above-mentioned case where the second predetermined condition is that the position of the time domain resource used for transmitting the sounding reference signal is adjacent to the position of the time domain resource for transmitting the data signal may take various forms. In one embodiment of the present disclosure, in the case where the second predetermined condition is that the position of the time domain resource used for transmitting the sounding reference signal is adjacent to the position of the time domain resource used for transmitting the data signal and the position of the time domain resource used for transmitting the sounding reference signal is before the position of the time domain resource used for transmitting the data signal, the above-mentioned time pattern of the sounding reference signal includes that the ending time of the first transmit power state conversion duration is before the starting time of the symbol used for transmitting the sounding reference signal; and/or in the case where the second predetermined condition is that the position of the time domain resource used for transmitting the sounding reference signal is adjacent to the position of the time domain resource used for transmitting the data signal and the position of the time domain resource used for transmitting the sounding reference signal is after the position of the time domain resource used for transmitting the data signal, the time pattern of the sounding reference signal is that the starting time of the second transmit power state conversion duration is after the ending time of the symbol used for transmitting the sounding reference signal.

In one embodiment of the present disclosure, in the case where the second predetermined condition is that the position of the time domain resource used for transmitting the sounding reference signal is adj acent to the position of the time domain resource for transmitting the control signal, the determined time pattern of the sounding reference signal includes at least one of the following: the starting time of a first transmit power state conversion duration of the sounding reference signal is after the starting time of a symbol used for transmitting the sounding reference signal, the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal, the ending time of a second transmit power state conversion duration of the sounding reference signal is before the ending time of the symbol used for transmitting the sounding reference signal, and the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state of the sounding reference signal, from a first transmit power of the sounding reference signal state to a second transmit power of the sounding reference signal. The second transmit power state conversion duration is a duration for converting from the transmit power on state to the transmit power off state or a duration for converting, in the transmit power on state of the sounding reference signal, from a third transmit power of the sounding reference signal to a fourth transmit power of the sounding reference signal. That is, when the sounding reference signal and the control signal are adjacent to each other in the time domain, the first transmit power state conversion duration and/or the second transmit power state conversion duration are located as much as possible within the symbol on which the sounding reference signal is located or occupy part of the resource of the symbol on which the sounding reference signal is located, so that the effect on the integrity of the control signal transmission can be reduced.

It is to be illustrated that the above-mentioned case where the second predetermined condition is that the position of the time domain resource used for transmitting the sounding reference signal is adjacent to the position of the time domain resource for transmitting the control signal may take various forms. In one embodiment of the present disclosure, one of the following forms may be taken: in the case where the second predetermined condition is that the position of the time domain resource used for transmitting the sounding reference signal is adjacent to the position of the time domain resource used for transmitting the control signal and the position of the time domain resource used for transmitting the sounding reference signal is before the position of the time domain resource used for transmitting the control signal, the time pattern of the sounding reference signal includes that the ending time of the second transmit power state conversion duration of the sounding reference signal is before the ending time of the symbol used for transmitting the sounding reference signal, or that the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal; and in the case where the second predetermined condition is that the position of the time domain resource used for transmitting the sounding reference signal is adjacent to the position of the time domain resource used for transmitting the control signal and the position of the time domain resource used for transmitting the sounding reference signal is after the position of the time domain resource used for transmitting the control signal, the time pattern of the sounding reference signal includes that the starting time of the first transmit power state conversion duration of the sounding reference signal is after the starting time of the symbol used for transmitting the sounding reference signal, or that the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal.

In one embodiment of the present disclosure, in the case where the first predetermined condition is that the transmission priority of the first signal corresponding to the first traffic type supported by the terminal is higher than the transmission priority of the second signal corresponding to the second traffic type supported by the terminal or that the first signal needs to occupy the time-frequency domain resource used for transmitting the second signal, the second predetermined condition includes at least one of the following: the position of the time domain resource used for transmitting the first signal is adjacent to the position of the time domain resource used for transmitting the second signal and the position of the time domain resource used for transmitting the second signal is before the position of the time domain resource used for transmitting the first signal, the position of the time domain resource used for transmitting the first signal is adjacent to the position of the time domain resource used for transmitting the second signal and the position of the time domain resource used for transmitting the second signal is after the position of the time domain resource used for transmitting the first signal, the position of the time domain resource used for transmitting the first signal overlaps the position of the time domain resource used for transmitting the second signal and the position of a time domain resource used for transmitting only the second signal is before the position of a time domain resource used for transmitting both the first signal and the second signal, and the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal.

It is to be illustrated that in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, the time pattern of the first signal includes that ending time of a first transmit power state conversion duration of the first signal is before the starting position of a symbol used for transmitting the first signal.

It is to be illustrated that in the case where the second predetermined condition includes that the position of the time domain resource used for transmitting the first signal is adjacent to the position of the time domain resource used for transmitting the second signal and the position of the time domain resource used for transmitting the second signal is after the position of the time domain resource used for transmitting the first signal, the above-mentioned time pattern of the first signal includes that starting time of a second transmit power state conversion duration of the first signal is after the ending position of the symbol used for transmitting the first signal.

It is to be illustrated that in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the first signal includes that the ending time of the first transmit power state conversion duration of the first signal is before the starting position of a symbol used for transmitting both the first signal and the second signal.

It is to be illustrated that in the case where the second predetermined condition includes that the position of the time domain resource used for transmitting the first signal partially overlaps the position of the time domain resource used for transmitting the second signal and the position of the time domain resource used for transmitting only the second signal is after the position of the time domain resource used for transmitting both the first signal and the second signal, the time pattern of the first signal includes that the starting time of the second transmit power state conversion duration of the first signal is after the ending position of an overlapped symbol used for transmitting both the first signal and the second signal.

It is to be illustrated that the first transmit power state conversion duration of the first signal is a duration for converting from the transmit power off state of the first signal to the transmit power on state of the first signal or a duration for converting, in the transmit power on state of the first signal, from a first transmit power of the first signal to a second transmit power of the first signal; and the second transmit power state conversion duration of the first signal is a duration for converting from the transmit power on state of the first signal to the transmit power off state of the first signal or a duration for converting, in the transmit power on state of the first signal, from a third transmit power of the first signal to a fourth transmit power of the first signal.

It is to be illustrated that in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, the time pattern of the second signal includes that ending time of a second transmit power state conversion duration of the second signal is before a ending position of a symbol used for transmitting the second signal. The second transmit power state conversion duration is a duration for converting from the transmit power on state of the second signal to the transmit power off state of the second signal or a duration for converting from a first transmit power of the second signal to a second transmit power of the second signal.

It is to be illustrated that in the case where the second predetermined condition includes that the position of the time domain resource used for transmitting the first signal is adjacent to the position of the time domain resource used for transmitting the second signal and the position of the time domain resource used for transmitting the second signal is after the position of the time domain resource used for transmitting the first signal, the time pattern of the second signal includes that starting time of a first transmit power state conversion duration of the second signal is after the starting position of the symbol used for transmitting the second signal.

It is to be illustrated that in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the second signal includes that the ending time of the second transmit power state conversion duration of the second signal is before the starting position of a symbol used for transmitting both the first signal and the second signal.

It is to be illustrated that in the case where the second predetermined condition includes that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the second signal includes that the starting time of the first transmit power state conversion duration of the second signal is after the ending position of the symbol used for transmitting both the first signal and the second signal.

It is to be illustrated that the first transmit power state conversion duration of the second signal is a duration for converting from the transmit power off state of the second signal to the transmit power on state of the second signal or a duration for converting, in the transmit power on state of the second signal, from the first transmit power of the second signal to the second transmit power of the second signal; and the second transmit power state conversion duration of the second signal is a duration for converting from the transmit power on state of the second signal to the transmit power off state of the second signal or a duration for converting, in the transmit power on state of the second signal, from a third transmit power of the second signal to a fourth transmit power of the second signal.

In the above-mentioned manner, the effect on the transmission time of useful signals carried by different traffic types can be reduced.

It is to be illustrated that the time pattern of the first signal and/or the time pattern of the second signal under the same second predetermined condition may be used in combination, or multiple forms of the time pattern of the first signal under the same second predetermined condition may be combined with each other, but not limited thereto.

It is to be illustrated that the first traffic type includes URLLC traffic and the second traffic type includes eMBB traffic.

In the above-mentioned manner, since being burst traffic, the URLLC traffic has an extremely high requirement for latency and reliability, and thus the first transmit power state conversion duration and/or the second transmit power state conversion duration of the first signal which can used for carrying the URLLC, and the first transmit power state conversion duration and/or the second transmit power state conversion duration of the second signal used for carrying the eMBB traffic are located within the symbol on which the second signal is located or the transmission time interval at which the second signal is located. In this way, the symbol or the transmission time interval where the URLLC is located is not occupied, so that the effect on the URLLC traffic can be reduced as much as possible.

It is to be illustrated that the above-mentioned first signal is different from the above-mentioned second signal. The first signal includes one of the sounding reference signal, the demodulation reference signal, the data signal and the control signal. The second signal includes one of the sounding reference signal, the demodulation reference signal, the data signal and the control signal.

It is to be illustrated that the second predetermined condition may, but may not necessarily, be acquired from the network-side device or from measurement of the terminal.

It is to be illustrated that the above steps may, but may not necessarily, be performed by the terminal.

From the description of the preceding implementation modes, it will be apparent to those skilled in the art that the method in the embodiment described above may be implemented by software plus a necessary general-purpose hardware platform, or may of course be implemented by hardware. However, in many cases, the former is a preferred implementation manner. Based on this understanding, the technical solution of the present disclosure substantially, or the part contributing to the existing art, may be embodied in the form of a software product. The software product is stored on a storage medium (such as a Read-Only Memory (ROM), a Random Access Memory (RAM), a magnetic disk, or an optical disk) and includes several instructions for enabling a terminal device (which may be a mobile phone, a computer, a server, or a network device) to execute the method described in each embodiment of the present disclosure.

### Embodiment two.

The following embodiment two is not according to the present disclosure and is presented for illustration purposes only.

This embodiment further provides a power state conversion apparatus. The apparatus is configured to implement the above-mentioned embodiment and application implementation mode. What has been described will not be repeated. As used below, the term "module" may be software, hardware or a combination thereof capable of implementing predetermined functions. The apparatus in the embodiment described below is preferably implemented by software, but implementation by hardware or by a combination of software and hardware is also possible and conceived.

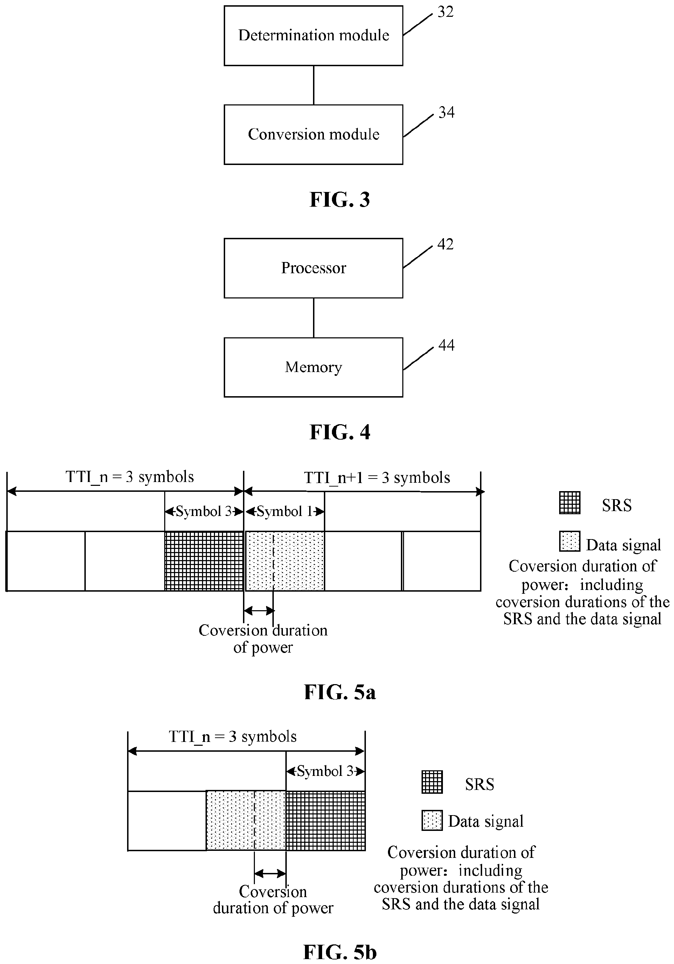

FIG. 3 is a structural block diagram of the power state conversion apparatus. As shown in FIG. 3, the apparatus includes a determination module 32 and a conversion module 34.

The determination module 32 is configured to determine, under a first predetermined condition, a time pattern used for describing a transmit power state conversion duration of a signal, where the first predetermined condition includes at least one of the following: an interval exists between the position of a time domain resource used for transmitting a sounding reference signal and the position of a time domain resource used for transmitting a demodulation reference signal when a terminal transmits the sounding reference signal, a transmission priority of a first signal corresponding to a first traffic type supported by the terminal is higher than a transmission priority of a second signal corresponding to a second traffic type supported by the terminal, and the first signal corresponding to the first traffic type supported by the terminal needs to occupy a time-frequency domain resource used for transmitting the second signal corresponding to the second traffic type supported by the terminal, where a time domain resource used for transmitting the second signal is greater than or equal to a corresponding time domain resource used for transmitting the first signal.

The conversion module 34 is connected to the above-mentioned determination module 32 and is configured to convert a transmit power state of the signal according to the time pattern, where the transmit power state includes one of: a transmit power on state, a transmit power off state and a magnitude of a transmit power of the signal in the transmit power on state.

Through the above-mentioned apparatus, in the case where the first predetermined condition includes at least one of the following: the interval exists between the position of the time domain resource used for transmitting the sounding reference signal and the position of the time domain resource used for transmitting the demodulation reference signal when the terminal transmits the sounding reference signal, the transmission priority of the first signal corresponding to the first traffic type supported by the terminal is higher than the transmission priority of the second signal corresponding to the second traffic type supported by the terminal, and the first signal corresponding to the first traffic type supported by the terminal needs to occupy the time-frequency domain resource used for transmitting the second signal corresponding to the second traffic type supported by the terminal, the time pattern of the signal can be determined; and then the transmit power state of the signal is converted according to the time pattern. That is, in the case of a short TTI, the corresponding time pattern may be determined according to the condition that the interval exists between the position of the time domain resource used for transmitting the sounding reference signal and the position of the time domain resource used for transmitting the demodulation reference signal when the terminal transmits the sounding reference signal, or the corresponding time pattern may be determined according to a relationship between traffic types in the case of multiplexing of at least two types of traffic; and then the transmit power state of the corresponding signal is converted according to the time pattern. Therefore, this can solve the problem where the transmit power state conversion of the signal cannot be implemented in the short TTI or in the case of multiplexing of at least two types of traffic in the related art, thereby reducing the effect on the transmission time of useful signals.

It is to be illustrated that the above-mentioned first predetermined condition may be acquired from a network-side device, for example, may be acquired from predefined information of a system, or may be acquired from configuration information on a network side, but is not limited thereto.

It is to be illustrated that the above-mentioned determination module 32 may be further configured to determine, before determining the time pattern used for describing the transmit power state conversion duration of the signal, a second predetermined condition and determine the time pattern according to the second predetermined condition.

It is to be illustrated that the above-mentioned determination module 32 may be further configured to determine, in the case where the first predetermined condition is that the interval exists between the position of the time domain resource used for transmitting the sounding reference signal and the position of the time domain resource used for transmitting the demodulation reference signal when the terminal transmits the sounding reference signal, that the second predetermined condition includes at least one of the following: the position of the time domain resource used for transmitting the sounding reference signal is adjacent to the position of a time domain resource used for transmitting a data signal, and the position of the time domain resource used for transmitting the sounding reference signal is adjacent to the position of a time domain resource used for transmitting a control signal.

It is to be illustrated that the above-mentioned determination module 32 may be further configured to determine, in the case where the second predetermined condition is that the position of the time domain resource used for transmitting the sounding reference signal is adjacent to the position of the time domain resource for transmitting the data signal, that the time pattern of the sounding reference signal includes at least one of the following: the ending time of a first transmit power state conversion duration of the sounding reference signal is before the starting time of a symbol used for transmitting the sounding reference signal, and the starting time of a second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state, from a first transmit power of the sounding reference signal to a second transmit power of the sounding reference signal. The second transmit power state conversion duration is a duration for converting from the transmit power on state to the transmit power off state or a duration for converting, in the transmit power on state, from a third transmit power of the sounding reference signal to a fourth transmit power of the sounding reference signal.

It is to be illustrated that the above-mentioned case where the second predetermined condition is that the position of the time domain resource used for transmitting the sounding reference signal is adjacent to the position of the time domain resource for transmitting the data signal may take various forms. In one example, in the case where the second predetermined condition is that the position of the time domain resource used for transmitting the sounding reference signal is adjacent to the position of the time domain resource used for transmitting the data signal and the position of the time domain resource used for transmitting the sounding reference signal is before the position of the time domain resource used for transmitting the data signal, the above-mentioned time pattern of the sounding reference signal is that the ending time of the first transmit power state conversion duration is before the starting time of the symbol used for transmitting the sounding reference signal; and/or in the case where the second predetermined condition is that the position of the time domain resource used for transmitting the sounding reference signal is adjacent to the position of the time domain resource used for transmitting the data signal and the position of the time domain resource used for transmitting the sounding reference signal is after the position of the time domain resource used for transmitting the data signal, the time pattern of the sounding reference signal is that the starting time of the second transmit power state conversion duration is after the ending time of the symbol used for transmitting the sounding reference signal.

In one example, the above-mentioned determination module 32 may be further configured to determine, in the case where the second predetermined condition is that the position of the time domain resource used for transmitting the sounding reference signal is adjacent to the position of the time domain resource for transmitting the control signal, that the time pattern of the sounding reference signal includes at least one of the following: the starting time of a first transmit power state conversion duration of the sounding reference signal is after the starting time of a symbol used for transmitting the sounding reference signal, the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal, the ending time of a second transmit power state conversion duration of the sounding reference signal is before the ending time of the symbol used for transmitting the sounding reference signal, and the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state of the sounding reference signal, from a first transmit power of the sounding reference signal state to a second transmit power of the sounding reference signal. The second transmit power state conversion duration is a duration for converting from the transmit power on state to the transmit power off state or a duration for converting, in the transmit power on state of the sounding reference signal, from a third transmit power of the sounding reference signal to a fourth transmit power of the sounding reference signal.

It is to be illustrated that the above-mentioned case where the position of the time domain resource used for transmitting the sounding reference signal is adjacent to the position of the time domain resource for transmitting the control signal may take various forms. In one example, one of the following forms may be taken: in the case where the second predetermined condition is that the position of the time domain resource used for transmitting the sounding reference signal is adjacent to the position of the time domain resource used for transmitting the control signal and the position of the time domain resource used for transmitting the sounding reference signal is before the position of the time domain resource used for transmitting the control signal, the time pattern of the sounding reference signal includes that the ending time of the second transmit power state conversion duration of the sounding reference signal is before the ending time of the symbol used for transmitting the sounding reference signal, or that the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal; and in the case where the second predetermined condition is that the position of the time domain resource used for transmitting the sounding reference signal is adjacent to the position of the time domain resource used for transmitting the control signal and the position of the time domain resource used for transmitting the sounding reference signal is after the position of the time domain resource used for transmitting the control signal, the time pattern of the sounding reference signal includes that the starting time of the first transmit power state conversion duration of the sounding reference signal is after the starting time of the symbol used for transmitting the sounding reference signal, or that the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal.

In one example, the above-mentioned determination module 32 may be further configured to determine, in the case where the first predetermined condition is that the transmission priority of the first signal corresponding to the first traffic type supported by the terminal is higher than the transmission priority of the second signal corresponding to the second traffic type supported by the terminal or that the first signal needs to occupy the time-frequency domain resource used for transmitting the second signal, that the second predetermined condition includes at least one of the following: the position of the time domain resource used for transmitting the first signal is adjacent to the position of the time domain resource used for transmitting the second signal and the position of the time domain resource used for transmitting the second signal is before the position of the time domain resource used for transmitting the first signal, the position of the time domain resource used for transmitting the first signal is adj acent to the position of the time domain resource used for transmitting the second signal and the position of the time domain resource used for transmitting the second signal is after the position of the time domain resource used for transmitting the first signal, the position of the time domain resource used for transmitting the first signal overlaps the position of the time domain resource used for transmitting the second signal and the position of a time domain resource used for transmitting only the second signal is before the position of a time domain resource used for transmitting both the first signal and the second signal, and the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal.

It is to be illustrated that the above-mentioned determination module 32 may be further configured to perform at least one of the following: in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, determining that the time pattern of the first signal includes that ending time of a first transmit power state conversion duration of the first signal is before the starting position of a symbol used for transmitting the first signal; in the case where the second predetermined condition includes that the position of the time domain resource used for transmitting the first signal is adj acent to the position of the time domain resource used for transmitting the second signal and the position of the time domain resource used for transmitting the second signal is after the position of the time domain resource used for transmitting the first signal, determining that the time pattern of the first signal includes that starting time of a second transmit power state conversion duration of the first signal is after the ending position of the symbol used for transmitting the first signal; in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the first signal includes that the ending time of the first transmit power state conversion duration of the first signal is before the starting position of a symbol used for transmitting both the first signal and the second signal; and in the case where the second predetermined condition includes that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the first signal includes that the starting time of the second transmit power state conversion duration of the first signal is after the ending position of an overlapped symbol used for transmitting both the first signal and the second signal.

It is to be illustrated that the first transmit power state conversion duration of the first signal is a duration for converting from the transmit power off state of the first signal to the transmit power on state of the first signal or a duration for converting, in the transmit power on state of the first signal, from a first transmit power of the first signal to a second transmit power of the first signal; and the second transmit power state conversion duration of the first signal is a duration for converting from the transmit power on state of the first signal to the transmit power off state of the first signal or a duration for converting, in the transmit power on state of the first signal, from a third transmit power of the first signal to a fourth transmit power of the first signal.

It is to be illustrated that the above-mentioned determination module 32 may be further configured to perform at least one of the following: in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, determining that the time pattern of the second signal includes that ending time of a second transmit power state conversion duration of the second signal is before the ending position of a symbol used for transmitting the second signal; in the case where the second predetermined condition includes that the position of the time domain resource used for transmitting the first signal is adjacent to the position of the time domain resource used for transmitting the second signal and the position of the time domain resource used for transmitting the second signal is after the position of the time domain resource used for transmitting the first signal, determining that the time pattern of the second signal includes that starting time of a first transmit power state conversion duration of the second signal is after the starting position of the symbol used for transmitting the second signal; in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the second signal includes that the ending time of the second transmit power state conversion duration of the second signal is before the starting position of a symbol used for transmitting both the first signal and the second signal; and in the case where the second predetermined condition includes that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the second signal includes that the starting time of the first transmit power state conversion duration of the second signal is after the ending position of the symbol used for transmitting both the first signal and the second signal.

It is to be illustrated that the first transmit power state conversion duration of the second signal is a duration for converting from the transmit power off state of the second signal to the transmit power on state of the second signal or a duration for converting, in the transmit power on state of the second signal, from the first transmit power of the second signal to the second transmit power of the second signal; and the second transmit power state conversion duration of the second signal is a duration for converting from the transmit power on state of the second signal to the transmit power off state of the second signal or a duration for converting, in the transmit power on state of the second signal, from a third transmit power of the second signal to a fourth transmit power of the second signal.

It is to be illustrated that the time pattern of the first signal and/or the time pattern of the second signal under the same second predetermined condition may be used in combination, or multiple forms of the time pattern of the first signal under the same second predetermined condition may be combined with each other, but not limited thereto.

It is to be illustrated that the first traffic type includes URLLC traffic and the second traffic type includes eMBB traffic.

In the above-mentioned manner, since being burst traffic, the URLLC traffic has an extremely high requirement for latency and reliability, and thus the first transmit power state conversion duration and/or the second transmit power state conversion duration of the first signal which can used for carrying the URLLC, and the first transmit power state conversion duration and/or the second transmit power state conversion duration of the second signal used for carrying the eMBB traffic are located within the symbol on which the second signal is located or the transmission time interval at which the second signal is located. In this way, the symbol or the transmission time interval where the URLLC is located is not occupied, so that the effect on the URLLC traffic can be reduced as much as possible.

It is to be illustrated that the above-mentioned first signal is different from the above-mentioned second signal. The first signal includes one of the sounding reference signal, the demodulation reference signal, the data signal and the control signal. The second signal includes one of the sounding reference signal, the demodulation reference signal, the data signal and the control signal.

It is to be illustrated that the second predetermined condition is acquired from the network-side device or from measurement of the terminal.

It is to be illustrated that the above apparatus may, but may not necessarily, be located in the terminal.

It is to be illustrated that the various modules described above may be implemented by software or hardware. Implementation by hardware may, but may not necessarily, be performed in the following manners: the various modules described above are located in a same processor, or the various modules described above are located in their respective processors in any combination form.

### Embodiment three

The embodiment of the present disclosure further provides a terminal. FIG. 4 is a structural block diagram of the terminal according to the embodiment of the present disclosure. As shown in FIG. 4, the terminal may include a processor 42 and a memory 44.

The processor 42 is configured to determine, under a first predetermined condition, a time pattern used for describing a transmit power state conversion duration of a signal, where the first predetermined condition includes at least one of the following: an interval exists between the position of a time domain resource used for transmitting a sounding reference signal and the position of a time domain resource used for transmitting a demodulation reference signal when a terminal transmits the sounding reference signal, a transmission priority of a first signal corresponding to a first traffic type supported by the terminal is higher than a transmission priority of a second signal corresponding to a second traffic type supported by the terminal, and the first signal corresponding to the first traffic type supported by the terminal needs to occupy a time-frequency domain resource used for transmitting the second signal corresponding to the second traffic type supported by the terminal, where a time domain resource used for transmitting the second signal is greater than or equal to a corresponding time domain resource used for transmitting the first signal; and convert a transmit power state of the signal according to the time pattern, where the transmit power state includes one of: a transmit power on state, a transmit power off state and a magnitude of a transmit power of the signal in the transmit power on state.

The memory 44 is coupled to the processor 42.

Through the above-mentioned terminal, in the case where the first predetermined condition includes at least one of the following: the interval exists between the position of the time domain resource used for transmitting the sounding reference signal and the position of the time domain resource used for transmitting the demodulation reference signal when the terminal transmits the sounding reference signal, the transmission priority of the first signal corresponding to the first traffic type supported by the terminal is higher than the transmission priority of the second signal corresponding to the second traffic type supported by the terminal, and the first signal corresponding to the first traffic type supported by the terminal needs to occupy the time-frequency domain resource used for transmitting the second signal corresponding to the second traffic type supported by the terminal, the time pattern of the signal can be determined; and then the transmit power state of the signal is converted according to the time pattern. That is, in the case of a short TTI, the corresponding time pattern may be determined according to the condition that the interval exists between the position of the time domain resource used for transmitting the sounding reference signal and the position of the time domain resource used for transmitting the demodulation reference signal when the terminal transmits the sounding reference signal, or the corresponding time pattern may be determined according to a relationship between traffic types in the case of multiplexing of at least two types of traffic; and then the transmit power state of the corresponding signal is converted according to the time pattern. Therefore, this can solve the problem where the transmit power conversion of the signal cannot be implemented in the short TTI or in the case of multiplexing of at least two types of traffic in the related art, thereby reducing the effect on the transmission time of useful signals.

It is to be illustrated that the above-mentioned first predetermined condition may be acquired from a network-side device, for example, may be acquired from predefined information of a system, or may be acquired from configuration information on a network side, but is not limited thereto.

It is to be illustrated that the above-mentioned processor 42 may be further configured to determine, before determining the time pattern used for describing the transmit power state conversion duration of the signal, a second predetermined condition and determine the time pattern according to the second predetermined condition.

In one embodiment of the present disclosure, the above-mentioned processor 42 may be further configured to determine, in the case where the first predetermined condition is that the interval exists between the position of the time domain resource used for transmitting the sounding reference signal and the position of the time domain resource used for transmitting the demodulation reference signal when the terminal transmits the sounding reference signal, that the second predetermined condition includes at least one of the following: the position of the time domain resource used for transmitting the sounding reference signal is adjacent to the position of a time domain resource used for transmitting a data signal; and the position of the time domain resource used for transmitting the sounding reference signal is adjacent to the position of a time domain resource used for transmitting a control signal.

It is to be illustrated that the above-mentioned processor 42 may be further configured to determine, in the case where the second predetermined condition is that the position of the time domain resource used for transmitting the sounding reference signal is adjacent to the position of the time domain resource for transmitting the data signal, that the time pattern of the sounding reference signal includes at least one of the following: the ending time of a first transmit power state conversion duration of the sounding reference signal is before the starting time of a symbol used for transmitting the sounding reference signal, and the starting time of a second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state, from a first transmit power of the sounding reference signal to a second transmit power of the sounding reference signal. The second transmit power state conversion duration is a duration for converting from the transmit power on state to the transmit power off state or a duration for converting, in the transmit power on state, from a third transmit power of the sounding reference signal to a fourth transmit power of the sounding reference signal.

It is to be illustrated that the above-mentioned case where the second predetermined condition is that the position of the time domain resource used for transmitting the sounding reference signal is adjacent to the position of the time domain resource for transmitting the data signal may take various forms. In one embodiment of the present disclosure, in the case where the second predetermined condition is that the position of the time domain resource used for transmitting the sounding reference signal is adjacent to the position of the time domain resource used for transmitting the data signal and the position of the time domain resource used for transmitting the sounding reference signal is before the position of the time domain resource used for transmitting the data signal, the above-mentioned time pattern of the sounding reference signal is that the ending time of the first transmit power state conversion duration is before the starting time of the symbol used for transmitting the sounding reference signal; and/or in the case where the second predetermined condition is that the position of the time domain resource used for transmitting the sounding reference signal is adjacent to the position of the time domain resource used for transmitting the data signal and the position of the time domain resource used for transmitting the sounding reference signal is after the position of the time domain resource used for transmitting the data signal, the time pattern of the sounding reference signal is that the starting time of the second transmit power state conversion duration is after the ending time of the symbol used for transmitting the sounding reference signal.

In one embodiment of the present disclosure, the above-mentioned processor 42 may be further configured to determine, in the case where the second predetermined condition is that the position of the time domain resource used for transmitting the sounding reference signal is adjacent to the position of the time domain resource for transmitting the control signal, that the time pattern of the sounding reference signal includes at least one of the following: the starting time of a first transmit power state conversion duration of the sounding reference signal is after the starting time of a symbol used for transmitting the sounding reference signal, the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal, the ending time of a second transmit power state conversion duration of the sounding reference signal is before the ending time of the symbol used for transmitting the sounding reference signal, and the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal. The first transmit power state conversion duration is a duration for converting from the transmit power off state to the transmit power on state or a duration for converting, in the transmit power on state of the sounding reference signal, from a first transmit power of the sounding reference signal state to a second transmit power of the sounding reference signal. The second transmit power state conversion duration is a duration for converting from the transmit power on state to the transmit power off state or a duration for converting, in the transmit power on state of the sounding reference signal, from a third transmit power of the sounding reference signal to a fourth transmit power of the sounding reference signal.

It is to be illustrated that the above-mentioned case where the position of the time domain resource used for transmitting the sounding reference signal is adjacent to the position of the time domain resource for transmitting the control signal may take various forms. In one embodiment of the present disclosure, one of the following forms may be taken: in the case where the second predetermined condition is that the position of the time domain resource used for transmitting the sounding reference signal is adjacent to the position of the time domain resource used for transmitting the control signal and the position of the time domain resource used for transmitting the sounding reference signal is before the position of the time domain resource used for transmitting the control signal, the time pattern of the sounding reference signal includes that the ending time of the second transmit power state conversion duration of the sounding reference signal is before the ending time of the symbol used for transmitting the sounding reference signal, or that the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal; and in the case where the second predetermined condition is that the position of the time domain resource used for transmitting the sounding reference signal is adjacent to the position of the time domain resource used for transmitting the control signal and the position of the time domain resource used for transmitting the sounding reference signal is after the position of the time domain resource used for transmitting the control signal, the time pattern of the sounding reference signal includes that the starting time of the first transmit power state conversion duration of the sounding reference signal is after the starting time of the symbol used for transmitting the sounding reference signal, or that the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal.

In one embodiment of the present disclosure, the above-mentioned processor 42 may be further configured to determine, in the case where the first predetermined condition is that the transmission priority of the first signal corresponding to the first traffic type supported by the terminal is higher than the transmission priority of the second signal corresponding to the second traffic type supported by the terminal or that the first signal needs to occupy the time-frequency domain resource used for transmitting the second signal, that the second predetermined condition includes at least one of the following: the position of the time domain resource used for transmitting the first signal is adjacent to the position of the time domain resource used for transmitting the second signal and the position of the time domain resource used for transmitting the second signal is before the position of the time domain resource used for transmitting the first signal, the position of the time domain resource used for transmitting the first signal is adjacent to the position of the time domain resource used for transmitting the second signal and the position of the time domain resource used for transmitting the second signal is after the position of the time domain resource used for transmitting the first signal, the position of the time domain resource used for transmitting the first signal overlaps the position of the time domain resource used for transmitting the second signal and the position of a time domain resource used for transmitting only the second signal is before the position of a time domain resource used for transmitting both the first signal and the second signal, and the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal.

It is to be illustrated that the above-mentioned processor 42 may be further configured to perform at least one of the following: in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, determining that the time pattern of the first signal includes that ending time of a first transmit power state conversion duration of the first signal is before the starting position of a symbol used for transmitting the first signal; in the case where the second predetermined condition includes that the position of the time domain resource used for transmitting the first signal is adjacent to the position of the time domain resource used for transmitting the second signal and the position of the time domain resource used for transmitting the second signal is after the position of the time domain resource used for transmitting the first signal, determining that the time pattern of the first signal includes that starting time of a second transmit power state conversion duration of the first signal is after the ending position of the symbol used for transmitting the first signal; in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the first signal includes that the ending time of the first transmit power state conversion duration of the first signal is before the starting position of a symbol used for transmitting both the first signal and the second signal; and in the case where the second predetermined condition includes that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the first signal includes that the starting time of the second transmit power state conversion duration of the first signal is after the ending position of an overlapped symbol used for transmitting both the first signal and the second signal.

It is to be illustrated that the first transmit power state conversion duration of the first signal is a duration for converting from the transmit power off state of the first signal to the transmit power on state of the first signal or a duration for converting, in the transmit power on state of the first signal, from a first transmit power of the first signal to a second transmit power of the first signal; and the second transmit power state conversion duration of the first signal is a duration for converting from the transmit power on state of the first signal to the transmit power off state of the first signal or a duration for converting, in the transmit power on state of the first signal, from a third transmit power of the first signal to a fourth transmit power of the first signal.

It is to be illustrated that the above-mentioned processor 42 may be further configured to perform at least one of the following: in the case where the second predetermined condition includes that the position of the time domain resource used for transmitting the first signal is adjacent to the position of the time domain resource used for transmitting the second signal and the position of the time domain resource used for transmitting the second signal is before the position of the time domain resource used for transmitting the first signal, determining that the time pattern of the second signal includes that ending time of a second transmit power state conversion duration of the second signal is before the ending position of a symbol used for transmitting the second signal; a duration for converting from a first transmit power of the second signal to a second transmit power of the second signal; in the case where the second predetermined condition includes that the position of the time domain resource used for transmitting the first signal is adjacent to the position of the time domain resource used for transmitting the second signal and the position of the time domain resource used for transmitting the second signal is after the position of the time domain resource used for transmitting the first signal, determining that the time pattern of the second signal includes that starting time of a first transmit power state conversion duration of the second signal is after the starting position of the symbol used for transmitting the second signal; in the case where the second predetermined condition includes that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the second signal includes that the ending time of the second transmit power state conversion duration of the second signal is before the starting position of a symbol used for transmitting both the first signal and the second signal; and in the case where the second predetermined condition includes that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the second signal includes that the starting time of the first transmit power state conversion duration of the second signal is after the ending position of the symbol used for transmitting both the first signal and the second signal.

It is to be illustrated that the first transmit power state conversion duration of the second signal is a duration for converting from the transmit power off state of the second signal to the transmit power on state of the second signal or a duration for converting, in the transmit power on state of the second signal, from the first transmit power of the second signal to the second transmit power of the second signal; and the second transmit power state conversion duration of the second signal is a duration for converting from the transmit power on state of the second signal to the transmit power off state of the second signal or a duration for converting, in the transmit power on state of the second signal, from a third transmit power of the second signal to a fourth transmit power of the second signal.

It is to be illustrated that the time pattern of the first signal and/or the time pattern of the second signal under the same second predetermined condition may be used in combination, or multiple forms of the time pattern of the first signal under the same second predetermined condition may be combined with each other, but not limited thereto.

It is to be illustrated that the first traffic type includes URLLC traffic and the second traffic type includes eMBB traffic.

In the above-mentioned manner, since being burst traffic, the URLLC traffic has an extremely high requirement for latency and reliability, and thus the first transmit power state conversion duration and/or the second transmit power state conversion duration of the first signal which can used for carrying the URLLC, and the first transmit power state conversion duration and/or the second transmit power state conversion duration of the second signal used for carrying the eMBB traffic are located within the symbol on which the second signal is located or the transmission time interval at which the second signal is located. In this way, the symbol or the transmission time interval where the URLLC is located is not occupied, so that the effect on the URLLC traffic can be reduced as much as possible.

It is to be illustrated that the above-mentioned first signal is different from the above-mentioned second signal. The first signal includes one of the sounding reference signal, the demodulation reference signal, the data signal and the control signal. The second signal includes one of the sounding reference signal, the demodulation reference signal, the data signal and the control signal.

It is to be illustrated that the second predetermined condition is acquired from the network-side device or from measurement of the terminal.

### Embodiment four

The embodiment of the present disclosure further provides a storage medium. The storage medium stores a program. When the program is executed, a device in which the storage medium is located is controlled to perform any one of the above-mentioned methods.

Optionally, in this embodiment, the storage medium may be configured to store program codes for performing the steps of the method in the embodiment one.

Optionally, in this embodiment, the preceding storage medium may include, but is not limited to, a USB flash disk, a ROM, a RAM, a mobile hard disk, a magnetic disk, an optical disk or another medium capable of storing program codes.

An embodiment of the present disclosure further provides a processor. The processor is configured to execute a program, where when the program is executed, the steps in any one of the above-mentioned methods are performed. Optionally, in this embodiment, the above-mentioned program is used for performing the steps in the method of embodiment one.

Optionally, for specific examples in this embodiment, reference may be made to the examples described in the above-mentioned embodiments and optional implementation modes, and repetition will not be made in the present embodiment.

For a better understanding of the embodiments of the present disclosure, the present disclosure is further described below in conjunction with application embodiments.

The application embodiments of the present disclosure provide a processing method of a time pattern for transmit power state conversion. When a terminal transmits a sounding reference signal, the method can solve the problem of how to reduce the effect on the integrity of sounding reference signal transmission through an appropriate time pattern of terminal transmit power when the sounding reference signal is adjacent to different kinds of signals in the time domain, and can also solve the problem where the transmission time at which the sounding reference signal is carried is greatly affected by a transmit power state conversion duration of the terminal as the duration of a symbol on which the sounding reference signal is located is shortened.

Moreover, the preferred embodiments of the present disclosure provide a processing method of the time pattern for the transmit power state conversion. When there are different traffic types, the method can solve the problem of how to choose an appropriate time pattern of the transmit power for the terminal according to different traffic types to reduce the effect on the transmission time of useful signals carried by different traffic types.

### Application embodiment one

This application embodiment provides a time pattern of transmit power state conversion when two adjacent TTIs in the time domain are each equal to three symbols, where an SRS is transmitted on the last symbol of TTI_n and a data signal is transmitted on the first symbol of TTI_n+1. FIG. 5a is a schematic diagram of the time pattern for the transmit power state conversion when the sounding reference signal is adjacent to the data signal in the time domain according to application embodiment one of the present disclosure. As shown in FIG. 5a, the time pattern includes that the conversion duration of the transmit power of the SRS from the on state to the off state is after the ending time of the symbol on which the current SRS is located, and that the conversion duration of the transmit power of the data signal on the first symbol of TTI_n+1 from the off state to the on state is after the starting time of the symbol on which the data is located. Moreover, a DMRS cannot be transmitted on the first symbol of TTI_n+1.

Since the object of transmitting SRS is to complete uplink and downlink channel estimation, if the transmit power state conversion duration occupies the time for transmitting the SRS, not only the time for transmitting the SRS will be shortened dramatically (assuming that the transmit power state conversion duration keeps about 20 µs of the existing LTE, and that one symbol, namely (1/14)ms, is about 71 µs when the subcarrier spacing is 15KHz, then when the transmit power reaches a rated value after the end of the symbol on which the SRS is located, 20µs can been saved for transmitting the SRS), but also the degree of interference to the SRS signal will be reduced (the start of the transmit power state conversion duration of the data signal of TTI_n+1 is configured to be after the ending time of the symbol on which the SRS is located).

Moreover, when the DMRS is transmitted on the first symbol of TTI_n+1, the object of rapidly demodulating the data can be achieved, and the DMRS is also very important and implements the data demodulation function, so if the DMRS is transmitted on the first symbol of TTI_n+1, where the role of SRS and the role of DMRS are equivalent, then the action of locating the transmit power state conversion duration within the SRS or within the DMRS is unacceptable. Therefore, data is transmitted on the first symbol of TTI_n+1, and the transmit power state conversion duration located within the transmission time interval for the data has less effect than the transmit power state conversion duration located within the SRS or the DMRS.

### Application embodiment two

This application embodiment provides a time pattern for transmit power state conversion when one TTI is equal to three symbols, where a data signal is transmitted on the second-to-last symbol of the current TTI and an SRS is transmitted on the last symbol of the current TTI. FIG. 5b is a schematic diagram of the time pattern for the transmit power state conversion when the sounding reference signal is adjacent to the data signal in the time domain according to application embodiment two of the present disclosure. As shown in FIG. 5b, the time pattern includes that the conversion duration of the transmit power of the data signal from the on state to the off state is before the ending time of the symbol on which the data is located, and that the conversion duration of the transmit power of the SRS from the off state to the on state is before the starting time of the symbol on which the current SRS is located. Moreover, a DMRS cannot be transmitted on the second-to-last symbol of the current TTI.

Therefore, a guard interval exists between the SRS and the DMRS, that is, the SRS and the DMRS are discrete in the time domain.

### Application embodiment three

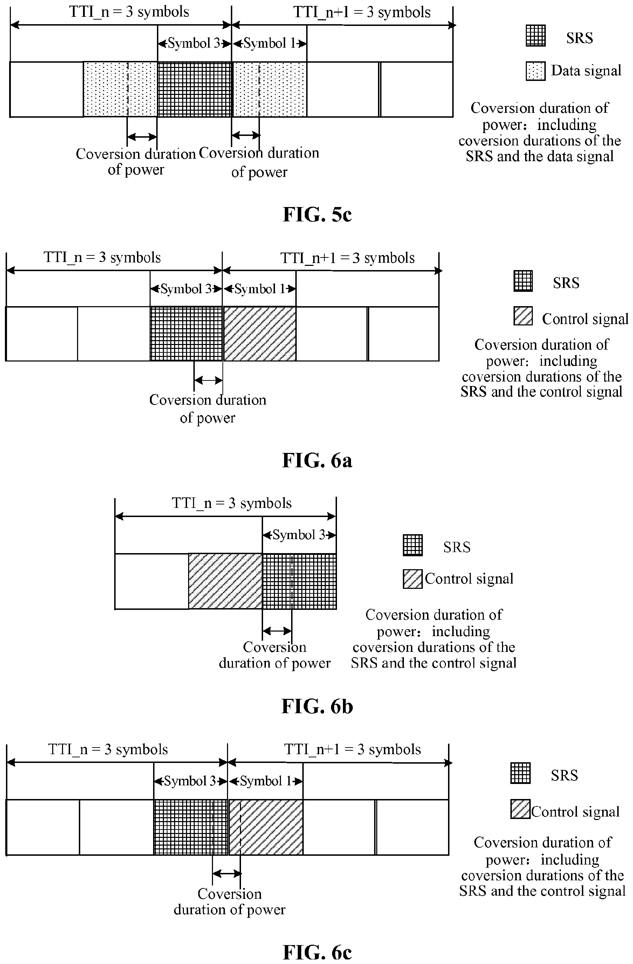

This application embodiment provides a time pattern for transmit power state conversion when two adjacent TTIs in the time domain are each equal to three symbols, where a data signal and an SRS are transmitted on the second-to-last symbol and the last symbol of TTI_n, respectively, and where the data signal is transmitted on the first symbol of TTI_n+1. FIG. 5c is a schematic diagram of a time pattern for transmit power state conversion when the sounding reference signal is adjacent to the data signal in the time domain according to application embodiment three of the present disclosure.

The conversion duration of the transmit power of the SRS from the off state to the on state is before the starting time of the symbol on which the SRS is located, and the conversion duration of the transmit power of the SRS from the on state to the off state is after the ending time of the symbol on which the SRS is located.

The conversion duration of the transmit power of the data signal transmitted on the first symbol of TTI_n + 1 from the off state to the on state is after the starting time of the symbol on which the data is located.

### Application embodiment four

In this application embodiment, the solution is similar to the solutions of application embodiment one to application embodiment three. That is, based on application embodiment one to application embodiment three, this application embodiment is different from application embodiment one to application embodiment three in that: the mentioned case where the transmit power is converted from the off state to the on state or from the on state to the off state is not fixed, a case where the transmit power is always on may exist and the conversion duration is a duration from transmit power 1 to transmit power 2.

### Application embodiment five

This application embodiment provides a time pattern for transmit power state conversion when two adjacent TTIs in the time domain are each equal to three symbols, where an SRS is transmitted on the last symbol of TTI_n and a control signal is transmitted on the first symbol of TTI_n+1. FIG. 6a is a schematic diagram of a time pattern for transmit power state conversion when the sounding reference signal is adjacent to the control signal in the time domain according to application embodiment five of the present disclosure. As shown in FIG. 6a, the time pattern includes that the conversion duration of the transmit power of the SRS from the on state to the off state is before the ending time of the symbol on which the current SRS is located, and that the conversion duration of the transmit power of the control signal on the first symbol of TTI_n+1 from the off state to the on state is before the starting time of the symbol on which the control signal is located.

### Application embodiment six

This application embodiment provides a time pattern for transmit power state conversion when one TTI is equal to three symbols, where a control signal is transmitted on the second-to-last symbol of the current TTI and an SRS is transmitted on the last symbol of the current TTI. FIG. 6b is a schematic diagram of a time pattern for transmit power state conversion when the sounding reference signal is adjacent to the control signal in the time domain according to application embodiment six of the present disclosure. As shown in FIG. 6b, the time pattern includes that the conversion duration of the transmit power of the control signal from the on state to the off state is after the ending time of the symbol on which the control signal is located, and that the conversion duration of the transmit power of the SRS from the off state to the on state is after the starting time of the symbol on which the current SRS is located.

### Application embodiment seven

This application embodiment provides a time pattern for transmit power state conversion when two adjacent TTIs in the time domain are each equal to three symbols, where an SRS is transmitted on the last symbol of TTI_n and a control signal is transmitted on the first symbol of TTI_n+1. FIG. 6c is a schematic diagram of the time pattern for the transmit power state conversion when the sounding reference signal is adjacent to the control signal in the time domain according to application embodiment seven of the present disclosure. As shown in FIG. 6c, the time pattern includes that the conversion duration of the transmit power of the SRS from the on state to the off state is before the ending time of the symbol on which the current SRS is located and occupies part of the carried time of the first symbol of TTI_n+1, and that the conversion duration of the transmit power of the control signal on the first symbol of TTI_n+1 from the on state to the off state is before the starting time of the symbol on which the control signal is located and occupies part of the carried time of the symbol on which the control signal is located. The transmit power state conversion duration of the SRS occupies both part of the time of the symbol on which the SRS is located and part of the time of the symbol on which the control signal is located. The transmit power state conversion duration of the control signal occupies both part of the time of the symbol on which the control signal is located and part of the time of the symbol on which the SRS is located.

### Application embodiment eight

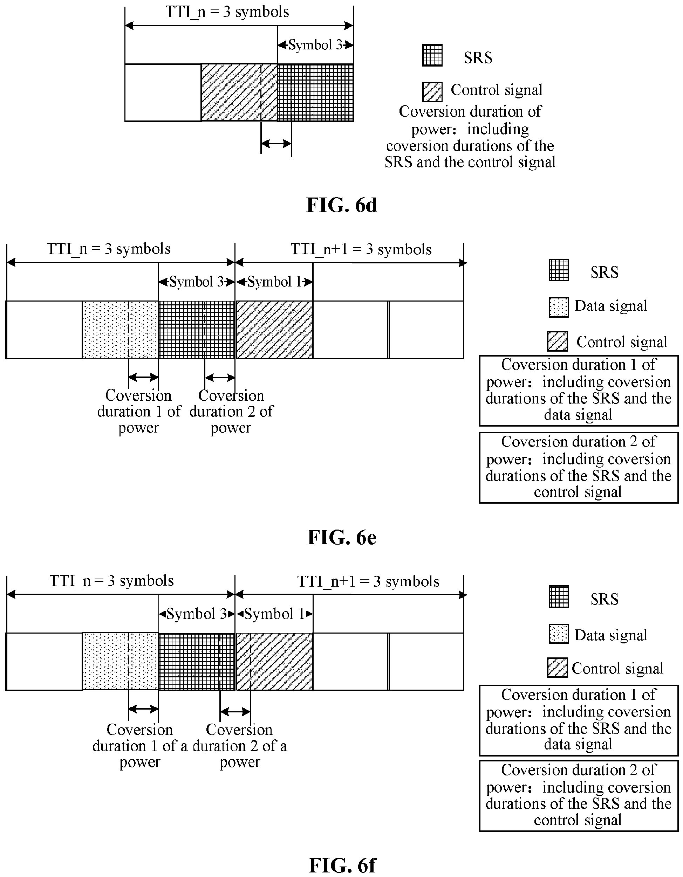

This application embodiment provides a time pattern for transmit power state conversion when one TTI is equal to three symbols, where a control signal is transmitted on the second-to-last symbol of the current TTI and an SRS is transmitted on the last symbol of the current TTI. FIG. 6d is a schematic diagram of the time pattern for the transmit power state conversion when the sounding reference signal is adjacent to the control signal in the time domain according to application embodiment eight of the present disclosure. As shown in FIG. 6b, the time pattern includes that the conversion duration of the transmit power of the control signal from the on state to the off state is before the ending time of the symbol on which the control signal is located and occupies part of the time at which the SRS signal is carried, and that the conversion duration of the transmit power of the SRS from the off state to the on state is before the starting time of the symbol on which the current SRS is located and occupies part of the carried time of the symbol on which the current SRS is located. The transmit power state conversion duration of the SRS occupies both part of the time of the symbol on which the SRS is located and part of the time of the symbol on which the control signal is located. The transmit power state conversion duration of the control signal occupies both part of the time of the symbol on which the control signal is located and part of the time of the symbol on which the SRS is located. Application embodiment nine

This application embodiment provides a time pattern for transmit power state conversion when two adjacent TTIs in the time domain are each equal to three symbols, where a data signal and an SRS are transmitted on the second-to-last symbol and the last symbol of TTI_n, respectively, and where the control signal is transmitted on the first symbol of TTI_n+1. FIG. 6e is a schematic diagram of the time pattern for the transmit power state conversion when the sounding reference signal is adjacent to the control signal in the time domain according to application embodiment nine of the present disclosure.

As shown in FIG. 6e, the conversion duration of the transmit power of the SRS from the off state to the on state is before the starting time of the symbol on which the SRS is located, and the conversion duration of the transmit power of the SRS from the on state to the off state is before the ending time of the symbol on which the SRS is located.

The conversion duration of the transmit power of the control signal transmitted on the first symbol of TTI n + 1 from the off state to the on state is before the starting time of the symbol on which the control signal is located.

### Application embodiment ten

This application embodiment provides a time pattern for transmit power state conversion when two adjacent TTIs in the time domain are each equal to three symbols, where a data signal and an SRS are transmitted on the second-to-last symbol and the last symbol of TTI_n, respectively, and where the control signal is transmitted on the first symbol of TTI_n+1. FIG. 6f is a schematic diagram of the time pattern for the transmit power state conversion when the sounding reference signal is adjacent to the control signal in the time domain according to application embodiment ten of the present disclosure.

As shown in FIG. 6f, the conversion duration of the transmit power of the SRS from the off state to the on state is before the starting time of the symbol on which the SRS is located, and the conversion duration of the transmit power of the SRS from the on state to the off state is after the ending time of the symbol on which the SRS is located and occupies part of the carried time of the first symbol of TTI_n+1.

The conversion duration of the transmit power of the control signal transmitted on the first symbol of TTI_n + 1 from the off state to the on state is before the starting time of the symbol on which the control signal is located and occupies part of the carried time of the symbol on which the control signal is located.

### Application embodiment eleven

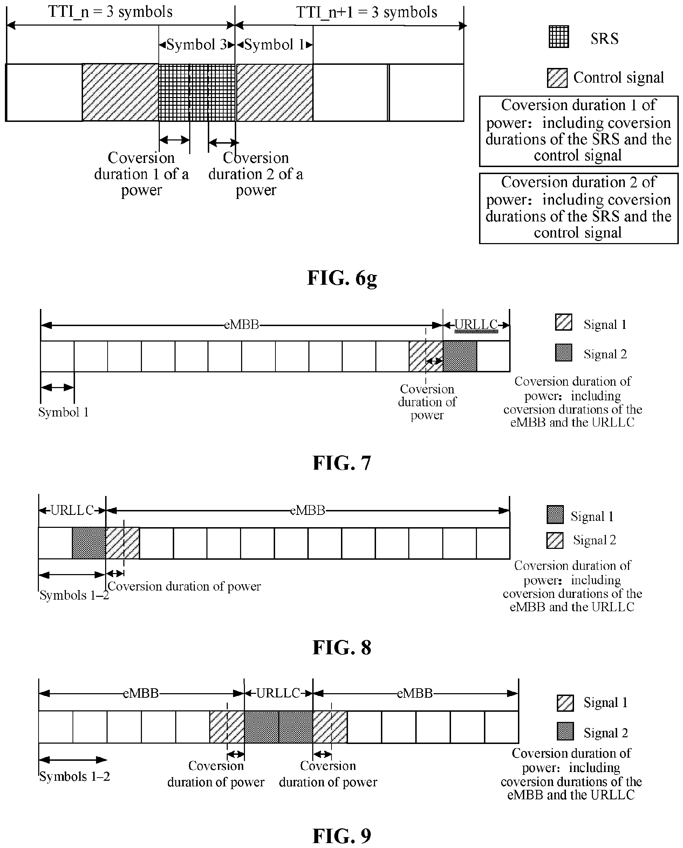

This application embodiment provides a time pattern for transmit power state conversion when two adjacent TTIs in the time domain are each equal to three symbols, where a control signal and an SRS are transmitted on the second-to-last symbol and the last symbol of TTI_n, respectively, and where the control signal is transmitted on the first symbol of TTI_n+1. FIG. 6g is a schematic diagram of the time pattern for the transmit power state conversion when the sounding reference signal is adjacent to the control signal in the time domain according to application embodiment eleven of the present disclosure.

As shown in FIG. 6g, the conversion duration of the transmit power of the SRS from the off state to the on state is before the starting time of the symbol on which the SRS is located, and the conversion duration of the transmit power of the SRS from the on state to the off state is before the ending time of the symbol on which the SRS is located.

The conversion duration of the transmit power of the control signal transmitted on the first symbol of TTI_n + 1 from the off state to the on state is before the starting time of the symbol on which the control signal is located. The conversion duration of the transmit power of the control signal transmitted on the second-to-second symbol of TTI n + 1 from the on state to the off state is after the ending time of the symbol on which the control signal is located.

### Application embodiment twelve

Based on application embodiment eleven, a transmit power state conversion duration of a control signal may be before the ending time of the symbol on which the control signal is located and occupy part of the time of the symbol on which the control signal is located.

The transmit power state conversion duration of the control signal may be after the ending time of the symbol on which the control signal is located.

The transmit power state conversion duration of the control signal may be after the starting time of the symbol on which the control signal is located and occupy part of the time of the adjacent symbol on which an SRS signal is located in the time domain.

The transmit power state conversion duration of the control signal may be before the starting time of the symbol on which the control signal is located.

A transmit power state conversion duration of the SRS may be after the starting time of the symbol on which the SRS signal is located.

The transmit power state conversion duration of the SRS may be before the starting time of the symbol on which the SRS is located and occupy part of the time of the adjacent symbol on which the control signal is located in the time domain.

The transmit power state conversion duration of the SRS may be before the ending time of the symbol on which the SRS signal is located.

The transmit power state conversion duration of the SRS may be before the ending time of the symbol on which the SRS is located and occupy part of the time of the adjacent symbol on which the control signal is located in the time domain.

The transmit power state conversion time patterns of the SRS and the control signal mentioned above may be used in any combination, and there are too many combinations, which are not listed here.

### Application embodiment thirteen

Based on application embodiment five to embodiment twelve, the mentioned case where the transmit power is converted from the off state to the on state or from the on state to the off state is not fixed, a case where the transmit power is always on may exist and the conversion duration is a duration from transmit power 1 to transmit power 2 .

From application embodiment one to application embodiment twelve above, subcarrier spacing may be 15KHz, 60KHz, 75KHz, 120KHz, or until to 240KHz, or may be less than 15KHz.

The embodiments described below are examples of time patterns for transmit power conversion in the case of multiplexing of different types of traffic.

### Application embodiment fourteen

This application embodiment provides two types of traffic adjacent to each other in the time domain, where the duration of TTI n in which eMBB traffic is carried is 14 symbols and URLLC occupies the last two symbols of TTI_n. When the eMBB traffic has been transmitted on the first twelve symbols, the URLLC traffic arrives and occupies the thirteenth and fourteenth symbols for URLLC transmission. When the twelfth symbol of TTI n is used for transmitting signal 1 of the eMBB traffic and the thirteenth symbol of TTI_n is used for transmitting signal 2 of the URLLC, FIG. 7 is a schematic diagram of a time pattern for transmit power state conversion when the end of the transmission time interval for the eMBB is punctured or is stopped to wait for transmission for the URLLC according to application embodiment fourteen of the present disclosure.

The conversion duration of the transmit power of signal 1 from the on state to the off state is before the ending time of the symbol on which signal 1 is located.

The conversion duration of the transmit power of signal 2 from the off state to the on state is before the starting time of the symbol on which signal 2 is located.

The reason for processing in this manner is that since the URLLC is burst traffic, the terminal stops transmitting the eMBB traffic signal and transmits the URLLC traffic signal when the base station notifies or the terminal detects the arrival of the URLLC traffic. Moreover, the URLLC traffic has an extremely high requirement for latency, where the user plane air-interface time does not exceed 0.5ms, and the URLLC traffic also has an extremely high requirement for reliability, which is 99.999%. In addition, the data of the URLLC is generally a series of commands, and thus the URLLC data amount is small. Due to the above-listed special requirements of the URLLC, the transmission priority of the URLLC traffic is high. Thus, both the transmit power state conversion duration of the URLLC and the transmit power state conversion duration of the eMBB are located within the symbol or transmission time interval at which a carrier signal of the eMBB traffic is located. In this way, the transmission time interval or symbol on which the URLLC is located is not occupied and the effect on the URLLC traffic is minimized.

### Application embodiment fifteen

This application embodiment provides two types of traffic adjacent to each other in the time domain, where the duration of TTI_n in which eMBB traffic is carried is 14 symbols and URLLC occupies the two symbols at the start of TTI_n. The URLLC traffic arrives and occupies the first and second symbols for URLLC transmission, and then the eMBB traffic begins to be transmitted on the third symbol. When the second symbol of TTI_n is used for transmitting signal 1 of the URLLC traffic and the third symbol of TTI_n is used for transmitting signal 2 of the eMBB, FIG. 8 is a schematic diagram of a time pattern for transmit power state conversion when the start of the transmission time interval for the eMBB is punctured for the URLLC or the eMBB stops and waits for transmission at the start of the transmission time interval due to the URLLC according to application embodiment fifteen of the present disclosure.

The conversion duration of the transmit power of signal 1 from the on state to the off state is after the ending time of the symbol on which signal 1 is located.

The conversion duration of the transmit power of signal 2 from the off state to the on state is after the staring time of the symbol on which signal 2 is located.

### Application embodiment sixteen

This application embodiment provides two types of traffic adjacent to each other in the time domain, where the duration of TTI n in which eMBB traffic is carried is 14 symbols and URLLC occupies two symbols at the middle time of TTI_n. When the eMBB traffic has been transmitted to the first six symbols, the URLLC traffic arrives and occupies the seventh and eighth symbols for URLLC transmission. Then the eMBB traffic resumes being transmitted on the ninth symbol. When the sixth symbol of TTI_n is used for transmitting signal 1 of the eMBB traffic and the seventh symbol of TTI_n is used for transmitting signal 2 of the URLLC, FIG. 9 is a schematic diagram of a time pattern for transmit power state conversion when the middle of the transmission time interval for the eMBB is punctured for the URLLC or the eMBB stops and waits for transmission at the middle of the transmission time interval due to URLLC according to application embodiment sixteen of the present disclosure.

When the eighth symbol of TTI_n is also used for transmitting signal 2 of the URLLC and the ninth symbol of the TTI_n resumes being used for transmitting signal 1 of the eMBB, the time pattern for the transmit power state conversion is as shown in FIG. 8.

Each transmit power state conversion duration is located within a symbol on which signal 1 of the eMBB is located.

### Application embodiment seventeen

This application embodiment provides two types of traffic adjacent to each other in the time domain, where the duration of TTI_n at which eMBB traffic is carried is 14 symbols. When URLLC traffic arrives, signals of the URLLC traffic and the eMBB traffic are allowed to be transmitted simultaneously, and the two types of traffic can be correctly received by an advanced receiver at a receiving end.

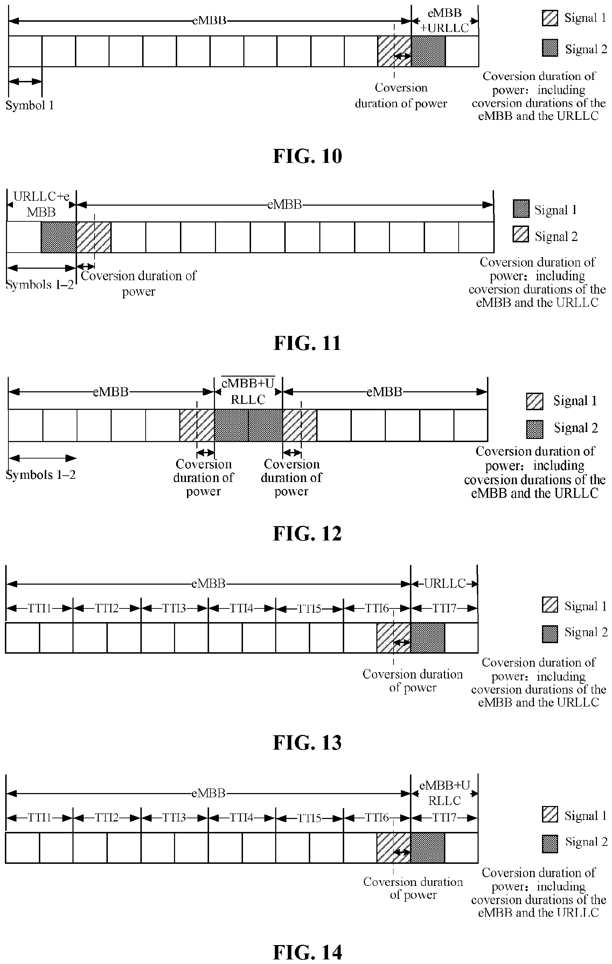

Both the signals of the URLLC traffic and the eMBB traffic occupy the last two symbols. When the eMBB traffic has been transmitted on the first twelve symbols, the URLLC traffic arrives and both the URLLC and the eMBB occupy the thirteenth and fourteenth symbols. When the twelfth symbol of TTI_n is used for transmitting signal 1 of the eMBB traffic and the thirteenth symbol of TTI n is used for transmitting superimposed signal 2 of the eMBB and the URLLC, FIG. 10 is a schematic diagram of a time pattern for transmit power state conversion when both the URLLC and the eMBB are transmitted at the end of the transmission time interval for the eMBB according to application embodiment seventeen of the present disclosure.

The conversion duration of the transmit power of signal 1 from state 1 to state 2 is before the ending time of the symbol on which signal 1 is located.

The conversion duration of the transmit power of signal 2 from state 1 to state 2 is before the starting time of the symbol in which signal 2 is located.

### Application embodiment eighteen

This application embodiment provides two types of traffic adjacent to each other in the time domain, where the duration of TTI_n in which eMBB traffic is carried is 14 symbols. When URLLC traffic arrives, signals of the URLLC traffic and the eMBB traffic are allowed to be transmitted simultaneously, and the two types of traffic can be correctly received by an advanced receiver at a receiving end.

The URLLC traffic arrives, the first and second symbols are occupied for transmitting both the eMBB and the URLLC traffic, and then the eMBB traffic resumes being transmitted on the third symbol. When the first and second symbols at TTI_n are used for transmitting superimposed signal 1 of the URLLC and the eMBB and the third symbol of TTI_n is used for transmitting signal 2 of only the eMBB traffic, FIG. 11 is a schematic diagram of a time pattern for transmit power state conversion when both the URLLC and the eMBB are transmitted at the start of the transmission time interval for the eMBB according to application embodiment eighteen of the present disclosure.

The conversion duration of the transmit power of signal 1 from state 1 to state 2 is after the ending time of the symbol on which signal 1 is located.

The conversion duration of the transmit power of signal 2 from state 1 to state 2 is after the starting time of the symbol on which signal 2 is located.

### Application embodiment nineteen

This application embodiment provides two types of traffic adjacent in the time domain, where the duration of TTI n in which eMBB traffic is carried is 14 symbols. When URLLC traffic arrives, signals of the URLLC traffic and the eMBB traffic are allowed to be transmitted simultaneously, and the two types of traffic can be correctly received by an advanced receiver at a receiving end.

The URLLC and the eMBB occupy two symbols at the middle of TTI_n. When the eMBB traffic has been transmitted on the first six symbols, the URLLC traffic arrives and occupies the seventh and eighth symbols for URLLC traffic transmission. Then the eMBB traffic resumes being transmitted on the ninth symbol. When the sixth symbol of TTI_n is used for transmitting signal 1 of the eMBB traffic and the seventh and eighth symbols of TTI_n are used for transmitting signal 2 of the eMBB and the URLLC, FIG. 12 is a schematic diagram of a time pattern for transmit power state conversion when both the URLLC and the eMBB are transmitted at the middle of the transmission time interval for the eMBB according to application embodiment nineteen of the present disclosure.

When the seventh and eighth symbols of TTI_n are still used for transmitting signal 2 of the eMBB and the URLLC and signal 1 of the eMBB resumes being transmitted on the ninth symbol of TTI_n, the time pattern for the transmit power state conversion is as shown in FIG. 12.

The conversion duration of the transmit power of signal 1 from state 1 to state 2 is after the ending time of the symbol on which signal 1 is located.

The conversion duration of the transmit power of signal 1 from state 2 to state 1 is after the starting time of the symbol on which signal 1 is located.

The conversion duration of the transmit power of signal 2 from state 1 to state 2 is before the starting time of the symbol on which signal 1 is located.

The conversion duration of the transmit power of signal 2 from state 2 to state 1 is after the ending time of the symbol on which signal 1 is located.

### Application embodiment twenty

Based on application embodiment fourteen to application embodiment nineteen where when URLLC traffic arrives, part of symbols of eMBB are punctured or eMBB stops and waits for transmission, or both URLLC and eMBB are transmitted on part of symbols of eMBB. In fact, TTI used for transmitting the eMBB and TTI used for transmitting the URLLC may be the same in length.

In this embodiment, eMBB is transmitted at TTI1 to TTI7 by way of example. Assuming that each TTI is 2 symbols and, when the eMBB traffic has been transmitted at TTI 1 to TTI 6, the URLLC traffic arrives, then the URLLC occupies TTI 7. In this case, a time pattern for transmit power state conversion is shown in FIG. 13. FIG. 13 is a schematic diagram of the time pattern for the transmit power state conversion when the URLLC has the same transmission time interval as the eMBB and at the last TTI for eMBB transmission, eMBB puncturing is performed or the eMBB stops and waits for transmission according to application embodiment twenty of the present disclosure.

In addition, the URLLC traffic may arrive at TTI 1, thereby occupying the transmission time of TTI 1.

The URLLC traffic may also arrive at the middle, for example, arrive at TTI 4.

Regardless of whether the URLLC traffic is transmitted before the eMBB traffic or arrives at the middle of the transmission of the eMBB, the time pattern of transmit power is the same as the time pattern for the case where the URLLC occupies a different symbol position than the eMBB. That is, the time pattern of transmit power is the same as the time patterns as shown in FIG. 7 and FIG. 8, except for the name of the time interval in which traffic is carried.

### Application embodiment twenty-one

By way of example, eMBB and URLLC are transmitted at the same TTI and eMBB is transmitted at TTI 1 to TTI 7. Assuming that each TTI is 2 symbols, and when the eMBB traffic has been transmitted at TTI 1 to TTI 6, the URLLC traffic arrives, then the URLLC and the eMBB can be transmitted simultaneously at TTI 7. In this case, a time pattern for transmit power conversion is as shown in FIG. 14. FIG. 14 is a schematic diagram of a time pattern for transmit power state conversion when the URLLC has the same transmission time interval as the eMBB and the eMBB and the URLLC are transmitted simultaneously at the last TTI for eMBB transmission according to application embodiment twenty-one of the present disclosure.

In addition, the URLLC traffic may arrive at TTI 1, and then the URLLC and the eMBB occupy the transmission time of TTI 1 if the URLLC and the eMBB are allowed to be transmitted simultaneously.

The URLLC traffic may also arrive at the middle, for example, arrive at TTI 4, and then both the URLLC and the eMBB occupy the transmission time of TTI 4 if the URLLC and the eMBB are allowed to be transmitted simultaneously.

Regardless of whether the URLLC is superimposed on the eMBB for transmission before the time at which only the eMBB traffic is transmitted or at the middle where only the eMBB traffic is transmitted, the time pattern of transmit power is the same as the time pattern for the case where the URLLC is superimposed on the eMBB to be transmitted and occupy a different symbol position than the eMBB. That is, the time pattern of transmit power is the same as conversion time patterns as shown in FIG. 9 and FIG. 10, except for the name of the time interval in which traffic is carried.

### Application embodiment twenty-two

Each of signal 1 and signal 2 mentioned based on application embodiment fourteen to application embodiment twenty-one may be an SRS, a control signal, a data signal, a DMRS, or the like.

In addition, based on application embodiment fourteen to application embodiment twenty-one, the mentioned transmit power conversion may be conversion from the off state to the on state or from the off state to the on state, or may be the conversion duration of different magnitudes of the transmit power in the transmit power on state.

Apparently, it should be understood by those skilled in the art that each of the above-mentioned modules or steps of the present disclosure may be implemented by a general-purpose computing apparatus, the modules or steps may be concentrated on a single computing apparatus or distributed on a network composed of multiple computing apparatuses, and alternatively, the modules or steps may be implemented by program codes executable by the computing apparatus, so that the modules or steps may be stored in a storage apparatus and executed by the computing apparatus. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

The above are only embodiments of the present disclosure and are not intended to limit the present disclosure, and for those skilled in the art, the present disclosure may have various modifications and variations. Any modifications, equivalent substitutions, improvements and the like within the principle of the present disclosure shall fall within the scope of the present disclosure.

### INDUSTRIAL APPLICABILITY

According to the solution provide in the present disclosure, in the case where a first predetermined condition includes at least one of the following: an interval exists between the position of a time domain resource used for transmitting a sounding reference signal and the position of a time domain resource used for transmitting a demodulation reference signal when a terminal transmits the sounding reference signal, the transmission priority of a first signal corresponding to a first traffic type supported by the terminal is higher than the transmission priority of a second signal corresponding to a second traffic type supported by the terminal, and the first signal corresponding to the first traffic type supported by the terminal needs to occupy a time-frequency domain resource used for transmitting the second signal corresponding to the second traffic type supported by the terminal, a time pattern of the signal can be determined; and then the transmit power state of the signal is converted according to the time pattern. That is, in the case of a short TTI, the corresponding time pattern may be determined according to the condition that the interval exists between the position of the time domain resource used for transmitting the sounding reference signal and the position of the time domain resource used for transmitting the demodulation reference signal when the terminal transmits the sounding reference signal, or the corresponding time pattern may be determined according to a relationship between traffic types in the case of multiplexing of at least two types of traffic; and then the transmit power state of the corresponding signal is converted according to the time pattern. Therefore, this can solve the problem where the transmit power conversion of the signal cannot be implemented in the short TTI or in the case of multiplexing of at least two types of traffic in the related art, thereby reducing the effect on the transmission time of useful signals.

The intended limitations are defined by the appended claims.

## Claims

1. A power state conversion method, comprising:
under a first predetermined condition, determining (S202) a time pattern used for describing a transmit power state conversion duration of a signal, wherein the first predetermined condition comprises at least one of the following:
an interval exists between a position of a time domain resource used for transmitting a sounding reference signal and a position of a time domain resource used for transmitting a demodulation reference signal when a terminal transmits the sounding reference signal,
a transmission priority of a first signal corresponding to a first traffic type supported by the terminal is higher than a transmission priority of a second signal corresponding to a second traffic type supported by the terminal, and
the first signal corresponding to the first traffic type supported by the terminal needs to occupy a time-frequency domain resource used for transmitting the second signal corresponding to the second traffic type supported by the terminal, wherein a time domain resource used for transmitting the second signal is greater than or equal to a corresponding time domain resource used for transmitting the first signal; and
converting (S204) a transmit power state of the signal according to the time pattern, wherein the transmit power state comprises one of: a transmit power on state, a transmit power off state and a magnitude of a transmit power of the signal in the transmit power on state.

2. The method according to claim 1, wherein
before determining (S202) the time pattern used for describing the transmit power state conversion duration of the signal, the method further comprises: determining a second predetermined condition; and
determining the time pattern used for describing the transmit power state conversion duration of the signal comprises: determining the time pattern according to the second predetermined condition.

3. The method according to claim 2, wherein in the case where the first predetermined condition is that the interval exists between the position of the time domain resource used for transmitting the sounding reference signal and the position of the time domain resource used for transmitting the demodulation reference signal when the terminal transmits the sounding reference signal, the second predetermined condition comprises at least one of the following:
the position of the time domain resource used for transmitting the sounding reference signal is adjacent to a position of a time domain resource used for transmitting a data signal; and
the position of the time domain resource used for transmitting the sounding reference signal is adjacent to a position of a time domain resource used for transmitting a control signal.

4. The method according to claim 3, wherein in the case where the second predetermined condition is that the position of the time domain resource used for transmitting the sounding reference signal is adjacent to the position of the time domain resource used for transmitting the data signal, the determined time pattern of the sounding reference signal comprises at least one of the following:
ending time of a first transmit power state conversion duration of the sounding reference signal is before starting time of a symbol used for transmitting the sounding reference signal; and
starting time of a second transmit power state conversion duration of the sounding reference signal is after ending time of the symbol used for transmitting the sounding reference signal,
wherein the first transmit power state conversion duration is a duration for converting from the transmit power off state to the transmit power on state or a duration for converting, in the transmit power on state, from a first transmit power of the sounding reference signal to a second transmit power of the sounding reference signal, and the second transmit power state conversion duration is a duration for converting from the transmit power on state to the transmit power off state or a duration for converting, in the transmit power on state, from a third transmit power of the sounding reference signal to a fourth transmit power of the sounding reference signal.

5. The method according to claim 4, wherein
in a case where the second predetermined condition is that the position of the time domain resource used for transmitting the sounding reference signal is adjacent to the position of the time domain resource used for transmitting the data signal and the position of the time domain resource used for transmitting the sounding reference signal is before the position of the time domain resource used for transmitting the data signal, the time pattern of the sounding reference signal is that the ending time of the first transmit power state conversion duration is before the starting time of the symbol used for transmitting the sounding reference signal; and/or
in a case where the second predetermined condition is that the position of the time domain resource used for transmitting the sounding reference signal is adjacent to the position of the time domain resource used for transmitting the data signal and the position of the time domain resource used for transmitting the sounding reference signal is after the position of the time domain resource used for transmitting the data signal, the time pattern of the sounding reference signal is that the starting time of the second transmit power state conversion duration is after the ending time of the symbol used for transmitting the sounding reference signal.

6. The method according to claim 3, wherein in the case where the second predetermined condition is that the position of the time domain resource used for transmitting the sounding reference signal is adjacent to the position of the time domain resource for transmitting the control signal, the determined time pattern of the sounding reference signal comprises at least one of the following:
starting time of a first transmit power state conversion duration of the sounding reference signal is after starting time of a symbol used for transmitting the sounding reference signal;
the starting time of the first transmit power state conversion duration of the sounding reference signal is before the starting time of the symbol used for transmitting the sounding reference signal and ending time of the first transmit power state conversion duration of the sounding reference signal is after the starting time of the symbol used for transmitting the sounding reference signal;
ending time of a second transmit power state conversion duration of the sounding reference signal is before ending time of the symbol used for transmitting the sounding reference signal; and
starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal,
wherein the first transmit power state conversion duration is a duration for converting from the transmit power off state to the transmit power on state or a duration for converting, in the transmit power on state of the sounding reference signal, from a first transmit power of the sounding reference signal state to a second transmit power of the sounding reference signal, and the second transmit power state conversion duration is a duration for converting from the transmit power on state to the transmit power off state or a duration for converting, in the transmit power on state of the sounding reference signal, from a third transmit power of the sounding reference signal to a fourth transmit power of the sounding reference signal.

7. The method according to claim 6, comprising at least one of the following:
in a case where the second predetermined condition is that the position of the time domain resource used for transmitting the sounding reference signal is adjacent to the position of the time domain resource used for transmitting the control signal and the position of the time domain resource used for transmitting the sounding reference signal is before the position of the time domain resource used for transmitting the control signal, the time pattern of the sounding reference signal comprises that the ending time of the second transmit power state conversion duration of the sounding reference signal is before the ending time of the symbol used for transmitting the sounding reference signal, or that the starting time of the second transmit power state conversion duration of the sounding reference signal is before the ending time of the symbol used for transmitting the sounding reference signal and the ending time of the second transmit power state conversion duration of the sounding reference signal is after the ending time of the symbol used for transmitting the sounding reference signal; and
in a case where the second predetermined condition is that the position of the time domain resource used for transmitting the sounding reference signal is adjacent to the position of the time domain resource used for transmitting the control signal and the position of the time domain resource used for transmitting the sounding reference signal is after the position of the time domain resource used for transmitting the control signal, the time pattern of the sounding reference signal comprises that the starting time of the first transmit power state conversion duration of the sounding reference signal is after the starting time of the symbol used for transmitting the sounding reference signal, or that the starting time of the first transmit power state conversion duration of the sounding reference signal is before the starting time of the symbol used for transmitting the sounding reference signal and the ending time of the first transmit power state conversion duration of the sounding reference signal is after the starting time of the symbol used for transmitting the sounding reference signal.

8. The method according to claim 2, wherein in the case where the first predetermined condition is that the transmission priority of the first signal corresponding to the first traffic type supported by the terminal is higher than the transmission priority of the second signal corresponding to the second traffic type supported by the terminal or that the first signal needs to occupy the time-frequency domain resource used for transmitting the second signal, the second predetermined condition comprises at least one of the following:
a position of the time domain resource used for transmitting the first signal is adjacent to a position of the time domain resource used for transmitting the second signal and the position of the time domain resource used for transmitting the second signal is before the position of the time domain resource used for transmitting the first signal;
the position of the time domain resource used for transmitting the first signal is adjacent to the position of the time domain resource used for transmitting the second signal and the position of the time domain resource used for transmitting the second signal is after the position of the time domain resource used for transmitting the first signal;
the position of the time domain resource used for transmitting the first signal overlaps the position of the time domain resource used for transmitting the second signal and a position of a time domain resource used for transmitting only the second signal is before a position of a time domain resource used for transmitting both the first signal and the second signal; and
the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal.

9. The method according to claim 8, comprising at least one of the following:
in the case where the second predetermined condition comprises that the position of the time domain resource used for transmitting the first signal is adjacent to the position of the time domain resource used for transmitting the second signal and the position of the time domain resource used for transmitting the second signal is before the position of the time domain resource used for transmitting the first signal, the time pattern of the first signal comprises that ending time of a first transmit power state conversion duration of the first signal is before a starting position of a symbol used for transmitting the first signal;
in the case where the second predetermined condition comprises that the position of the time domain resource used for transmitting the first signal is adjacent to the position of the time domain resource used for transmitting the second signal and the position of the time domain resource used for transmitting the second signal is after the position of the time domain resource used for transmitting the first signal, the time pattern of the first signal comprises that starting time of a second transmit power state conversion duration of the first signal is after an ending position of the symbol used for transmitting the first signal;
in the case where the second predetermined condition comprises that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the first signal comprises that the ending time of the first transmit power state conversion duration of the first signal is before a starting position of a symbol used for transmitting both the first signal and the second signal; and
in the case where the second predetermined condition comprises that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the first signal comprises that the starting time of a second transmit power state conversion duration of the first signal is after an ending position of an overlapped symbol used for transmitting both the first signal and the second signal,
wherein the first transmit power state conversion duration of the first signal is a duration for converting from the transmit power off state of the first signal to the transmit power on state of the first signal or a duration for converting, in the transmit power on state of the first signal, from a first transmit power of the first signal to a second transmit power of the first signal; and
wherein the second transmit power state conversion duration of the first signal is a duration for converting from the transmit power on state of the first signal to the transmit power off state of the first signal or a duration for converting, in the transmit power on state of the first signal, from a third transmit power of the first signal to a fourth transmit power of the first signal.

10. The method according to claim 8, comprising at least one of the following:
in the case where the second predetermined condition comprises that the position of the time domain resource used for transmitting the first signal is adjacent to the position of the time domain resource used for transmitting the second signal and the position of the time domain resource used for transmitting the second signal is before the position of the time domain resource used for transmitting the first signal, the time pattern of the second signal comprises that ending time of a second transmit power state conversion duration of the second signal is before a ending position of a symbol used for transmitting the second signal;
in the case where the second predetermined condition comprises that the position of the time domain resource used for transmitting the first signal is adjacent to the position of the time domain resource used for transmitting the second signal and the position of the time domain resource used for transmitting the second signal is after the position of the time domain resource used for transmitting the first signal, the time pattern of the second signal comprises that starting time of a first transmit power state conversion duration of the second signal is after a starting position of the symbol used for transmitting the second signal;
in the case where the second predetermined condition comprises that the position of the time domain resource used for transmitting the first signal overlaps the position of the time domain resource used for transmitting the second signal and the position of the time domain resource used for transmitting only the second signal is before the position of the time domain resource used for transmitting both the first signal and the second signal, the time pattern of the second signal comprises that the ending time of the second transmit power state conversion duration of the second signal is before a starting position of a symbol used for transmitting both the first signal
and the second signal; and
in the case where the second predetermined condition comprises that the position of the time domain resource used for transmitting the first signal overlaps the position of the time domain resource used for transmitting the second signal and the position of the time domain resource used for transmitting only the second signal is after the position of the time domain resource used for transmitting both the first signal and the second signal, the time pattern of the second signal comprises that the starting time of the first transmit power state conversion duration of the second signal is after an ending position of the symbol used for transmitting both the first signal and the second signal,
wherein the first transmit power state conversion duration of the second signal is a duration for converting from the transmit power off state of the second signal to the transmit power on state of the second signal or a duration for converting, in the transmit power on state of the second signal, from a first transmit power of the second signal to a second transmit power of the second signal; and
wherein the second transmit power state conversion duration of the second signal is a duration for converting from the transmit power on state of the second signal to the transmit power off state of the second signal or a duration for converting, in the transmit power on state of the second signal, from a third transmit power of the second signal to a fourth transmit power of the second signal.

11. The method according to any one of claims 2 to 10, wherein the first predetermined condition is acquired through a network-side device; and
wherein the second predetermined condition is acquired through a network-side device or through measurement of the terminal.

12. A processor (42), which is configured to execute a program, wherein when the program is executed, the method according to any one of claims 1 to 11 is performed.

13. A terminal, comprising:
a processor (42) according to claim 12; and
a memory (44), which is coupled to the processor (42).

14. A storage medium, comprising a stored program, wherein when the program is executed, a device in which the storage medium is located to is controlled to perform the method according to any one of claims 1 to 11.

## Patentansprüche

1. Verfahren zur Leistungszustandsumwandlung, das Folgendes umfasst:
bei einer ersten vorbestimmten Bedingung, Bestimmen (S202) eines Zeitmusters, das zum Beschreiben einer Übertragungsleistungszustand-Umwandlungsdauer eines Signals verwendet wird, wobei die erste vorbestimmte Bedingung mindestens eines der Folgenden umfasst:
ein Intervall existiert zwischen einer Position einer Zeitbereichsressource, die zum Übertragen eines Sondierungsreferenzsignals verwendet wird, und einer Position einer Zeitbereichsressource, die zum Übertragen eines Demodulationsreferenzsignals verwendet wird, wenn ein Endgerät das Sondierungsreferenzsignal überträgt,
eine Übertragungspriorität eines ersten Signals, das einer durch das Endgerät unterstützten ersten Verkehrsart entspricht, ist höher als eine Übertragungspriorität eines zweiten Signals, das einer durch das Endgerät unterstützten zweiten Verkehrsart entspricht, und
das erste Signal, das der durch das Endgerät unterstützten ersten Verkehrsart entspricht, muss eine Zeit-Frequenz-Bereichsressource belegen, die zum Übertragen des zweiten Signals verwendet wird, das der durch das Endgerät unterstützten zweiten Verkehrsart entspricht, wobei eine Zeitbereichsressource, die zum Übertragen des zweiten Signals verwendet wird, größer oder gleich einer entsprechenden Zeitbereichsressource ist, die zum Übertragen des ersten Signals verwendet wird; und
Umwandeln (S204) eines Übertragungsleistungszustands des Signals gemäß dem Zeitmuster, wobei der Übertragungsleistungszustand eines von Folgendem umfasst: einen Übertragungsleistung-Ein-Zustand, einen Übertragungsleistung-Aus-Zustand und eine Größe einer Übertragungsleistung des Signals im Übertragungsleistung-Ein-Zustand.

2. Verfahren nach Anspruch 1, wobei
vor dem Bestimmen (S202) des Zeitmusters, das zum Beschreiben der Übertragungsleistungszustand-Umwandlungsdauer des Signals verwendet wird, das Verfahren ferner Folgendes umfasst: Bestimmen einer zweiten vorbestimmten Bedingung; und
das Bestimmen des Zeitmusters, das zum Beschreiben der Übertragungsleistungszustand-Umwandlungsdauer des Signals verwendet wird, Folgendes umfasst: Bestimmen des Zeitmusters gemäß der zweiten vorbestimmten Bedingung.

3. Verfahren nach Anspruch 2, wobei in dem Fall, in dem die erste vorbestimmte Bedingung darin besteht, dass das Intervall zwischen der Position der Zeitbereichsressource, die zum Übertragen des Sondierungsreferenzsignals verwendet wird, und der Position der Zeitbereichsressource, die zum Übertragen des Demodulationsreferenzsignals verwendet wird, existiert, wenn das Endgerät das Sondierungsreferenzsignal überträgt, die zweite vorbestimmte Bedingung mindestens eines der Folgenden umfasst:
die Position der Zeitbereichsressource, die zum Übertragen des Sondierungsreferenzsignals verwendet wird, ist benachbart zu einer Position einer Zeitbereichsressource, die zum Übertragen eines Datensignals verwendet wird; und
die Position der Zeitbereichsressource, die zum Übertragen des Sondierungsreferenzsignals verwendet wird, ist benachbart zu einer Position einer Zeitbereichsressource, die zum Übertragen eines Steuersignals verwendet wird.

4. Verfahren nach Anspruch 3, wobei in dem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource ist, die zum Übertragen des Datensignals verwendet wird, ist, das bestimmte Zeitmuster des Sondierungsreferenzsignals mindestens eines der Folgenden umfasst:
ein Endzeitpunkt einer ersten Übertragungsleistungszustand-Umwandlungsdauer des Sondierungsreferenzsignals liegt vor einem Startzeitpunkt eines Symbols, das zum Übertragen des Sondierungsreferenzsignals verwendet wird; und
ein Startzeitpunkt einer zweiten Übertragungsleistungszustand-Umwandlungsdauer des Sondierungsreferenzsignals liegt nach einem Endzeitpunkt des Symbols, das zum Übertragen des Sondierungsreferenzsignals verwendet wird,
wobei die erste Übertragungsleistungszustand-Umwandlungsdauer eine Dauer zum Umwandeln von dem Übertragungsleistung-Aus-Zustand in den Übertragungsleistung-Ein-Zustand oder eine Dauer zum Umwandeln, in dem Übertragungsleistung-Ein-Zustand, von einer ersten Übertragungsleistung des Sondierungsreferenzsignals in eine zweite Übertragungsleistung des Sondierungsreferenzsignals ist, und die zweite Übertragungsleistungszustand-Umwandlungsdauer eine Dauer zum Umwandeln von dem Übertragungsleistung-Ein-Zustand in den Übertragungsleistung-Aus-Zustand oder eine Dauer zum Umwandeln, in dem Übertragungsleistung-Ein-Zustand, von einer dritten Übertragungsleistung des Sondierungsreferenzsignals in eine vierte Übertragungsleistung des Sondierungsreferenzsignals ist.

5. Verfahren nach Anspruch 4, wobei
in einem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource ist, die zum Übertragen des Datensignals verwendet wird, und die Position der Zeitbereichsressource, die zum Übertragen des Sondierungsreferenzsignals verwendet wird, vor der Position der Zeitbereichsressource, die zum Übertragen des Datensignals verwendet wird, liegt, das Zeitmuster des Sondierungsreferenzsignals darin besteht, dass der Endzeitpunkt der ersten Übertragungsleistungszustand-Umwandlungsdauer vor dem Startzeitpunkt des Symbols liegt, das zum Übertragen des Sondierungsreferenzsignals verwendet wird; und/oder
in einem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource ist, die zum Übertragen des Datensignals verwendet wird, und die Position der Zeitbereichsressource, die zum Übertragen des Sondierungsreferenzsignals verwendet wird, nach der Position der Zeitbereichsressource, die zum Übertragen des Datensignals verwendet wird, liegt, das Zeitmuster des Sondierungsreferenzsignals darin besteht, dass der Startzeitpunkt der zweiten Übertragungsleistungszustand-Umwandlungsdauer nach dem Endzeitpunkt des Symbols liegt, das zum Übertragen des Sondierungsreferenzsignals verwendet wird.

6. Verfahren nach Anspruch 3, wobei in dem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource zum Übertragen des Steuersignals ist, das bestimmte Zeitmuster des Sondierungsreferenzsignals mindestens eines der Folgenden umfasst:
ein Startzeitpunkt einer ersten Übertragungsleistungszustand-Umwandlungsdauer des Sondierungsreferenzsignals liegt nach einem Startzeitpunkt eines Symbols, das zum Übertragen des Sondierungsreferenzsignals verwendet wird;
der Startzeitpunkt der ersten Übertragungsleistungszustand-Umwandlungsdauer des Sondierungsreferenzsignals liegt vor dem Startzeitpunkt des Symbols, das zum Übertragen des Sondierungsreferenzsignals verwendet wird, und ein Endzeitpunkt der ersten Übertragungsleistungszustand-Umwandlungsdauer des Sondierungsreferenzsignals liegt nach dem Startzeitpunkt des Symbols, das zum Übertragen des Sondierungsreferenzsignals verwendet wird;
ein Endzeitpunkt einer zweiten Übertragungsleistungszustand-Umwandlungsdauer des Sondierungsreferenzsignals liegt vor einem Endzeitpunkt eines Symbols, das zum Übertragen des Sondierungsreferenzsignals verwendet wird; und
ein Startzeitpunkt der zweiten Übertragungsleistungszustand-Umwandlungsdauer des Sondierungsreferenzsignals liegt vor dem Endzeitpunkt des Symbols, das zum Übertragen des Sondierungsreferenzsignals verwendet wird, und der Endzeitpunkt der zweiten Übertragungsleistungszustand-Umwandlungsdauer des Sondierungsreferenzsignals liegt nach dem Endzeitpunkt des Symbols, das zum Übertragen des Sondierungsreferenzsignals verwendet wird,
wobei die erste Übertragungsleistungszustand-Umwandlungsdauer eine Dauer zum Umwandeln von dem Übertragungsleistung-Aus-Zustand in den Übertragungsleistung-Ein-Zustand oder eine Dauer zum Umwandeln, in dem Übertragungsleistung-Ein-Zustand des Sondierungsreferenzsignals, von einer ersten Übertragungsleistung des Sondierungsreferenzsignalzustands in eine zweite Übertragungsleistung des Sondierungsreferenzsignals ist, und die zweite Übertragungsleistungszustand-Umwandlungsdauer eine Dauer zum Umwandeln von dem Übertragungsleistung-Ein-Zustand in den Übertragungsleistung-Aus-Zustand oder eine Dauer zum Umwandeln, in dem Übertragungsleistung-Ein-Zustand des Sondierungsreferenzsignals, von einer dritten Übertragungsleistung des Sondierungsreferenzsignals in eine vierte Übertragungsleistung des Sondierungsreferenzsignals ist.

7. Verfahren nach Anspruch 6, das mindestens eines der Folgenden umfasst:
in einem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource ist, die zum Übertragen des Steuersignals verwendet wird, und die Position der Zeitbereichsressource, die zum Übertragen des Sondierungsreferenzsignals verwendet wird, vor der Position der Zeitbereichsressource, die zum Übertragen des Steuersignals verwendet wird, liegt, das Zeitmuster des Sondierungsreferenzsignals umfasst, dass der Endzeitpunkt der zweiten Übertragungsleistungszustand-Umwandlungsdauer des Sondierungsreferenzsignals vor dem Endzeitpunkt des Symbols liegt, das zum Übertragen des Sondierungsreferenzsignals verwendet wird, oder dass der Startzeitpunkt der zweiten Übertragungsleistungszustand-Umwandlungsdauer des Sondierungsreferenzsignals vor dem Endzeitpunkt des Symbols liegt, das zum Übertragen des Sondierungsreferenzsignals verwendet wird, und der Endzeitpunkt der zweiten Übertragungsleistungszustand-Umwandlungsdauer des Sondierungsreferenzsignals nach dem Endzeitpunkt des Symbols liegt, das zum Übertragen des Sondierungsreferenzsignals verwendet wird; und
in einem Fall, in dem die zweite vorbestimmte Bedingung darin besteht, dass die Position der Zeitbereichsressource, die zum Übertragen des Sondierungsreferenzsignals verwendet wird, benachbart zu der Position der Zeitbereichsressource ist, die zum Übertragen des Steuersignals verwendet wird, und die Position der Zeitbereichsressource, die zum Übertragen des Sondierungsreferenzsignals verwendet wird, nach der Position der Zeitbereichsressource, die zum Übertragen des Steuersignals verwendet wird, liegt, das Zeitmuster des Sondierungsreferenzsignals umfasst, dass der Startzeitpunkt der ersten Übertragungsleistungszustand-Umwandlungsdauer des Sondierungsreferenzsignals nach dem Startzeitpunkt des Symbols liegt, das zum Übertragen des Sondierungsreferenzsignals verwendet wird, oder dass der Startzeitpunkt der ersten Übertragungsleistungszustand-Umwandlungsdauer des Sondierungsreferenzsignals vor dem Startzeitpunkt des Symbols liegt, das zum Übertragen des Sondierungsreferenzsignals verwendet wird, und der Endzeitpunkt der ersten Übertragungsleistungszustand-Umwandlungsdauer des Sondierungsreferenzsignals nach dem Startzeitpunkt des Symbols liegt, das zum Übertragen des Sondierungsreferenzsignals verwendet wird.

8. Verfahren nach Anspruch 2, wobei in dem Fall, in dem die erste vorbestimmte Bedingung darin besteht, dass die Übertragungspriorität des ersten Signals, das der durch das Endgerät unterstützten ersten Verkehrsart entspricht, höher ist als die Übertragungspriorität des zweiten Signals, das der durch das Endgerät unterstützten zweite Verkehrsart entspricht, oder dass das erste Signal die Zeit-Frequenz-Bereichsressource belegen muss, die zum Übertragen des zweiten Signals verwendet wird, die zweite vorbestimmte Bedingung mindestens eines der Folgenden umfasst:
eine Position der Zeitbereichsressource, die zum Übertragen des ersten Signals verwendet wird, ist benachbart zu einer Position der Zeitbereichsressource, die zum Übertragen des zweiten Signals verwendet wird, und die Position der Zeitbereichsressource, die zum Übertragen des zweiten Signals verwendet wird, liegt vor der Position der Zeitbereichsressource, die zum Übertragen des ersten Signals verwendet wird;
die Position der Zeitbereichsressource, die zum Übertragen des ersten Signals verwendet wird, ist benachbart zu der Position der Zeitbereichsressource, die zum Übertragen des zweiten Signals verwendet wird, und die Position der Zeitbereichsressource, die zum Übertragen des zweiten Signals verwendet wird, liegt nach der Position der Zeitbereichsressource, die zum Übertragen des ersten Signals verwendet wird;
die Position der Zeitbereichsressource, die zum Übertragen des ersten Signals verwendet wird, überlappt die Position der Zeitbereichsressource, die zum Übertragen des zweiten Signals verwendet wird, und eine Position einer Zeitbereichsressource, die zum Übertragen nur des zweiten Signals verwendet wird, liegt vor einer Position einer Zeitbereichsressource, die zum Übertragen sowohl des ersten Signals als auch des zweiten Signals verwendet wird; und
die Position der Zeitbereichsressource, die zum Übertragen des ersten Signals verwendet wird, überlappt die Position der Zeitbereichsressource, die zum Übertragen des zweiten Signals verwendet wird, und die Position der Zeitbereichsressource, die zum Übertragen nur des zweiten Signals verwendet wird, liegt nach der Position einer Zeitbereichsressource, die zum Übertragen sowohl des ersten Signals als auch des zweiten Signals verwendet wird.

9. Verfahren nach Anspruch 8, das mindestens eines der Folgenden umfasst:
in dem Fall, in dem die zweite vorbestimmte Bedingung umfasst, dass die Position der Zeitbereichsressource, die zum Übertragen des ersten Signals verwendet wird, benachbart zu der Position der Zeitbereichsressource ist, die zum Übertragen des zweiten Signals verwendet wird, und die Position der Zeitbereichsressource, die zum Übertragen des zweiten Signals verwendet wird, vor der Position der Zeitbereichsressource, die zum Übertragen des ersten Signals verwendet wird, liegt, das Zeitmuster des ersten Signals umfasst, dass der Endzeitpunkt einer ersten Übertragungsleistungszustand-Umwandlungsdauer des ersten Signals vor einem Startzeitpunkt eines Symbols liegt, das zum Übertragen des ersten Signals verwendet wird;
in dem Fall, in dem die zweite vorbestimmte Bedingung umfasst, dass die Position der Zeitbereichsressource, die zum Übertragen des ersten Signals verwendet wird, benachbart zu der Position der Zeitbereichsressource ist, die zum Übertragen des zweiten Signals verwendet wird, und die Position der Zeitbereichsressource, die zum Übertragen des zweiten Signals verwendet wird, nach der Position der Zeitbereichsressource, die zum Übertragen des ersten Signals verwendet wird, liegt, das Zeitmuster des ersten Signals umfasst, dass ein Startzeitpunkt einer zweiten Übertragungsleistungszustand-Umwandlungsdauer des ersten Signals nach einem Endzeitpunkt des Symbols liegt, das zum Übertragen des ersten Signals verwendet wird;
in dem Fall, in dem die zweite vorbestimmte Bedingung umfasst, dass die Position der Zeitbereichsressource, die zum Übertragen des ersten Signals verwendet wird, die Position der Zeitbereichsressource, die zum Übertragen des zweiten Signals verwendet wird, überlappt und die Position der Zeitbereichsressource, die zum Übertragen nur des zweiten Signals verwendet wird, vor der Position der Zeitbereichsressource, die zum Übertragen sowohl des ersten Signals als auch des zweiten Signals verwendet wird, liegt, das Zeitmuster des ersten Signals umfasst, dass der Endzeitpunkt der ersten Übertragungsleistungszustand-Umwandlungsdauer des ersten Signals vor einem Startzeitpunkt eines Symbols liegt, das zum Übertragen sowohl des ersten Signals als auch des zweiten Signals verwendet wird; und
in dem Fall, in dem die zweite vorbestimmte Bedingung umfasst, dass die Position der Zeitbereichsressource, die zum Übertragen des ersten Signals verwendet wird, die Position der Zeitbereichsressource ist, die zum Übertragen des zweiten Signals verwendet wird, überlappt und die Position der Zeitbereichsressource, die zum Übertragen nur des zweiten Signals verwendet wird, nach der Position der Zeitbereichsressource, die zum Übertragen sowohl des ersten Signals als auch des zweiten Signals verwendet wird, liegt, das Zeitmuster des ersten Signals umfasst, dass der Startzeitpunkt einer zweiten Übertragungsleistungszustand-Umwandlungsdauer des ersten Signals nach einer Endposition eines überlappten Symbols liegt, das zum Übertragen sowohl des ersten Signals als auch des zweiten Signals verwendet wird,
wobei die erste Übertragungsleistungszustand-Umwandlungsdauer des ersten Signals eine Dauer zum Umwandeln von dem Übertragungsleistung-Aus-Zustand des ersten Signals in den Übertragungsleistung-Ein-Zustand des ersten Signals oder eine Dauer zum Umwandeln, in dem Übertragungsleistung-Ein-Zustand des ersten Signals, von einer ersten Übertragungsleistung des ersten Signals in eine zweite Übertragungsleistung des ersten Signals ist; und
wobei die zweite Übertragungsleistungszustand-Umwandlungsdauer des ersten Signals eine Dauer zum Umwandeln von dem Übertragungsleistung-Ein-Zustand des ersten Signals in den Übertragungsleistung-Aus-Zustand des ersten Signals oder eine Dauer zum Umwandeln, in dem Übertragungsleistung-Ein-Zustand des ersten Signals, von einer dritten Übertragungsleistung des ersten Signals in eine vierte Übertragungsleistung des ersten Signals ist.

10. Verfahren nach Anspruch 8, das mindestens eines der Folgenden umfasst:
in dem Fall, in dem die zweite vorbestimmte Bedingung umfasst, dass die Position der Zeitbereichsressource, die zum Übertragen des ersten Signals verwendet wird, benachbart zu der Position der Zeitbereichsressource ist, die zum Übertragen des zweiten Signals verwendet wird, und die Position der Zeitbereichsressource, die zum Übertragen des zweiten Signals verwendet wird, vor der Position der Zeitbereichsressource, die zum Übertragen des ersten Signals verwendet wird, liegt, das Zeitmuster des zweiten Signals umfasst, dass ein Endzeitpunkt einer zweiten Übertragungsleistungszustand-Umwandlungsdauer des zweiten Signals vor einer Endposition eines Symbols liegt, das zum Übertragen des zweiten Signals verwendet wird;
in dem Fall, in dem die zweite vorbestimmte Bedingung umfasst, dass die Position der Zeitbereichsressource, die zum Übertragen des ersten Signals verwendet wird, benachbart zu der Position der Zeitbereichsressource ist, die zum Übertragen des zweiten Signals verwendet wird, und die Position der Zeitbereichsressource, die zum Übertragen des zweiten Signals verwendet wird, nach der Position der Zeitbereichsressource, die zum Übertragen des ersten Signals verwendet wird, liegt, das Zeitmuster des zweiten Signals umfasst, dass ein Startzeitpunkt einer ersten Übertragungsleistungszustand-Umwandlungsdauer des zweiten Signals nach einer Startposition des Symbols liegt, das zum Übertragen des zweiten Signals verwendet wird;
in dem Fall, in dem die zweite vorbestimmte Bedingung umfasst, dass die Position der Zeitbereichsressource, die zum Übertragen des ersten Signals verwendet wird, die Position der Zeitbereichsressource, die zum Übertragen des zweiten Signals verwendet wird, überlappt und die Position der Zeitbereichsressource, die zum Übertragen nur des zweiten Signals verwendet wird, vor der Position der Zeitbereichsressource, die zum Übertragen sowohl des ersten Signals als auch des zweiten Signals verwendet wird, liegt, das Zeitmuster des zweiten Signals umfasst, dass der Endzeitpunkt der zweiten Übertragungsleistungszustand-Umwandlungsdauer des zweiten Signals vor einem Startzeitpunkt eines Symbols liegt, das zum Übertragen sowohl des ersten Signals als auch des zweiten Signals verwendet wird; und
in dem Fall, in dem die zweite vorbestimmte Bedingung umfasst, dass die Position der Zeitbereichsressource, die zum Übertragen des ersten Signals verwendet wird, die Position der Zeitbereichsressource, die zum Übertragen des zweiten Signals verwendet wird, überlappt und die Position der Zeitbereichsressource, die zum Übertragen nur des zweiten Signals verwendet wird, nach der Position der Zeitbereichsressource, die zum Übertragen sowohl des ersten Signals als auch des zweiten Signals verwendet wird, liegt, das Zeitmuster des zweiten Signals umfasst, dass der Startzeitpunkt der ersten Übertragungsleistungszustand-Umwandlungsdauer des zweiten Signals nach einer Endposition eines Symbols liegt, das zum Übertragen sowohl des ersten Signals als auch des zweiten Signals verwendet wird,
wobei die erste Übertragungsleistungszustand-Umwandlungsdauer des zweiten Signals eine Dauer zum Umwandeln von dem Übertragungsleistung-Aus-Zustand des zweiten Signals in den Übertragungsleistung-Ein-Zustand des zweiten Signals oder eine Dauer zum Umwandeln, in dem Übertragungsleistung-Ein-Zustand des zweiten Signals, von einer ersten Übertragungsleistung des zweiten Signals in eine zweite Übertragungsleistung des zweiten Signals ist; und
wobei die zweite Übertragungsleistungszustand-Umwandlungsdauer des zweiten Signals eine Dauer zum Umwandeln von dem Übertragungsleistung-Ein-Zustand des zweiten Signals in den Übertragungsleistung-Aus-Zustand des zweiten Signals oder eine Dauer zum Umwandeln, in dem Übertragungsleistung-Ein-Zustand des zweiten Signals, von einer dritten Übertragungsleistung des zweiten Signals in eine vierte Übertragungsleistung des zweiten Signals ist.

11. Verfahren nach einem der Ansprüche 2 bis 10, wobei die erste vorbestimmte Bedingung durch eine netzwerkseitige Vorrichtung erfasst wird; und
wobei die zweite vorgegebene Bedingung durch eine netzwerkseitige Vorrichtung oder durch Messung des Endgeräts erfasst wird.

12. Prozessor (42), der zum Ausführen eines Programms konfiguriert ist, wobei bei Ausführung des Programms das Verfahren nach einem der Ansprüche 1 bis 11 durchgeführt wird.

13. Endgerät, das Folgendes umfasst:
einen Prozessor (42) nach Anspruch 12; und
einen Speicher (44), der an den Prozessor (42) gekoppelt ist.

14. Speichermedium, das ein gespeichertes Programm umfasst, wobei bei Ausführung des Programms eine Vorrichtung, in der sich das Speichermedium befindet, gesteuert wird, um das Verfahren nach einem der Ansprüche 1 bis 11 durchzuführen.

## Revendications

1. Procédé de conversion d'état de puissance, comprenant :
dans une première condition prédéterminée, la détermination (S202) d'un modèle temporel utilisé pour décrire une durée de conversion d'état de puissance d'émission d'un signal, dans lequel la première condition prédéterminée comprend au moins l'un des éléments suivants :
un intervalle existe entre une position d'une ressource de domaine temporel utilisée pour transmettre un signal de référence de sondage et une position d'une ressource de domaine temporel utilisée pour transmettre un signal de référence de démodulation lorsqu'un terminal transmet le signal de référence de sondage,
une priorité de transmission d'un premier signal correspondant à un premier type de trafic supporté par le terminal est supérieure à une priorité de transmission d'un second signal correspondant à un second type de trafic supporté par le terminal, et
le premier signal correspondant au premier type de trafic pris en charge par le terminal doit occuper une ressource de domaine temps-fréquence utilisée pour transmettre le second signal correspondant au second type de trafic pris en charge par le terminal, dans lequel une ressource de domaine temporel utilisée pour transmettre le second signal est supérieure ou égale à une ressource de domaine temporel correspondante utilisée pour transmettre le premier signal ; et
la conversion (S204) d'un état de puissance d'émission du signal selon le modèle temporel, dans lequel l'état de puissance d'émission comprend l'un parmi : un état de puissance d'émission activée, un état de puissance d'émission désactivée et une amplitude d'une puissance d'émission du signal dans l'état de puissance d'émission activée.

2. Procédé selon la revendication 1, dans lequel
avant de déterminer (S202) le modèle temporel utilisé pour décrire la durée de conversion d'état de puissance d'émission du signal, le procédé comprend en outre : la détermination d'une seconde condition prédéterminée ; et
la détermination du modèle temporel utilisé pour décrire la durée de conversion d'état de puissance d'émission du signal comprend : la détermination du modèle temporel selon la seconde condition prédéterminée.

3. Procédé selon la revendication 2, dans lequel dans le cas où la première condition prédéterminée est que l'intervalle existe entre la position de la ressource de domaine temporel utilisée pour transmettre le signal de référence de sondage et la position de la ressource de domaine temporel utilisée pour transmettre le signal de référence de démodulation lorsque le terminal transmet le signal de référence de sondage, la seconde condition prédéterminée comprend au moins l'un des éléments suivants :
la position de la ressource de domaine temporel utilisée pour transmettre le signal de référence de sondage est adjacente à une position d'une ressource de domaine temporel utilisée pour transmettre un signal de données ; et
la position de la ressource de domaine temporel utilisée pour transmettre le signal de référence de sondage est adjacente à une position d'une ressource de domaine temporel utilisée pour transmettre un signal de commande.

4. Procédé selon la revendication 3, dans lequel dans le cas où la seconde condition prédéterminée est que la position de la ressource de domaine temporel utilisée pour transmettre le signal de référence de sondage est adjacente à la position de la ressource de domaine temporel utilisée pour transmettre le signal de données, le modèle temporel déterminé du signal de référence de sondage comprend au moins l'un des éléments suivants :
l'heure de fin d'une première durée de conversion d'état de puissance d'émission du signal de référence de sondage est antérieure à l'heure de début d'un symbole utilisé pour transmettre le signal de référence de sondage ; et
l'heure de fin d'une seconde durée de conversion d'état de puissance d'émission du signal de référence de sondage est postérieure à l'heure de fin du symbole utilisé pour transmettre le signal de référence de sondage,
dans lequel la première durée de conversion d'état de puissance d'émission est une durée de conversion de l'état de puissance d'émission désactivée à l'état de puissance d'émission activée ou une durée de conversion, dans l'état de puissance d'émission activée, d'une première puissance d'émission du signal de référence de sondage à une deuxième puissance d'émission du signal de référence de sondage, et la seconde durée de conversion d'état de puissance d'émission est une durée de conversion de l'état de puissance d'émission activée à l'état de puissance d'émission désactivée ou une durée de conversion, dans l'état de puissance d'émission activée, d'une troisième puissance d'émission du signal de référence de sondage à une quatrième puissance d'émission du signal de référence de sondage.

5. Procédé selon la revendication 4, dans lequel dans un cas où la seconde condition prédéterminée est que la position de la ressource de domaine temporel utilisée pour transmettre le signal de référence de sondage est adjacente à la position de la ressource de domaine temporel utilisée pour transmettre le signal de données et la position de la ressource de domaine temporel utilisée pour la transmission du signal de référence de sondage est antérieure à la position de la ressource de domaine temporel utilisée pour transmettre le signal de données, le modèle temporel du signal de référence de sondage est tel que l'heure de fin de la première durée de conversion d'état de puissance d'émission est antérieure à l'heure de début du symbole utilisé pour transmettre le signal de référence de sondage ; et/ou
dans un cas où la seconde condition prédéterminée est que la position de la ressource de domaine temporel utilisée pour transmettre le signal de référence de sondage est adjacente à la position de la ressource de domaine temporel utilisée pour transmettre le signal de données et la position de la ressource de domaine temporel utilisée pour la transmission du signal de référence de sondage est postérieure à la position de la ressource de domaine temporel utilisée pour transmettre le signal de données, le modèle temporel du signal de référence de sondage est tel que l'heure de début de la seconde durée de conversion d'état de puissance d'émission est postérieure à l'heure de fin du symbole utilisé pour transmettre le signal de référence de sondage.

6. Procédé selon la revendication 3, dans lequel dans le cas où la seconde condition prédéterminée est que la position de la ressource de domaine temporel utilisée pour transmettre le signal de référence de sondage est adjacente à la position de la ressource de domaine temporel pour transmettre le signal de commande, le modèle temporel déterminé du signal de référence de sondage comprend au moins l'un des éléments suivants :
l'heure de début d'une première durée de conversion d'état de puissance d'émission du signal de référence de sondage est postérieure à l'heure de début d'un symbole utilisé pour transmettre le signal de référence de sondage ;
l'heure de début de la première durée de conversion d'état de puissance d'émission du signal de référence de sondage est antérieure à l'heure de début du symbole utilisé pour transmettre le signal de référence de sondage et l'heure de fin de la première durée de conversion d'état de puissance d'émission du signal de référence de sondage est postérieure à l'heure de début du symbole utilisé pour transmettre le signal de référence de sondage ;
l'heure de fin d'une seconde durée de conversion d'état de puissance d'émission du signal de référence de sondage est antérieure à l'heure de fin du symbole utilisé pour transmettre le signal de référence de sondage ; et
l'heure de début de la seconde durée de conversion d'état de puissance d'émission du signal de référence de sondage est antérieure à l'heure de fin du symbole utilisé pour transmettre le signal de référence de sondage et l'heure de fin de la seconde durée de conversion d'état de puissance d'émission du signal de référence de sondage est postérieure à l'heure de fin du symbole utilisé pour transmettre le signal de référence de sondage,
dans lequel la première durée de conversion d'état de puissance d'émission est une durée de conversion de l'état de puissance d'émission désactivée à l'état de puissance d'émission activée ou une durée de conversion, dans l'état de puissance d'émission activée du signal de référence de sondage, d'une première puissance d'émission de l'état de signal de référence de sondage à une deuxième puissance d'émission du signal de référence de sondage, et la seconde durée de conversion d'état de puissance d'émission est une durée de conversion de l'état de puissance d'émission activée à l'état de puissance d'émission désactivée ou une durée de conversion, dans l'état de puissance d'émission activée du signal de référence de sondage, d'une troisième puissance d'émission du signal de référence de sondage à une quatrième puissance d'émission du signal de référence de sondage.

7. Procédé selon la revendication 6, comprenant au moins l'un des éléments suivants :
dans un cas où la seconde condition prédéterminée est que la position de la ressource de domaine temporel utilisée pour transmettre le signal de référence de sondage est adjacente à la position de la ressource de domaine temporel utilisée pour transmettre le signal de commande et la position de la ressource de domaine temporel utilisée pour la transmission du signal de référence de sondage est antérieure à la position de la ressource de domaine temporel utilisée pour transmettre le signal de commande, le modèle temporel du signal de référence de sondage comprend le fait que l'heure de début de la seconde durée de conversion d'état de puissance d'émission du signal de référence de sondage est antérieure à l'heure de fin du symbole utilisé pour transmettre le signal de référence de sondage, ou que l'heure de début de la seconde durée de conversion d'état de puissance d'émission du signal de référence de sondage est antérieure à l'heure de fin du symbole utilisé pour transmettre le signal de référence de sondage et l'heure de fin de la seconde durée de conversion d'état de puissance d'émission du signal de référence de sondage est postérieure à l'heure de fin du symbole utilisé pour transmettre le signal de référence de sondage ; et dans un cas où la seconde condition prédéterminée est que la position de la ressource de domaine temporel utilisée pour transmettre le signal de référence de sondage est adjacente à la position de la ressource de domaine temporel utilisée pour transmettre le signal de commande et la position de la ressource de domaine temporel utilisée pour la transmission du signal de référence de sondage est postérieure à la position de la ressource de domaine temporel utilisée pour transmettre le signal de commande, le modèle temporel du signal de référence de sondage comprend le fait que l'heure de début de la première durée de conversion d'état de puissance d'émission du signal de référence de sondage est postérieure à l'heure de début du symbole utilisé pour transmettre le signal de référence de sondage, ou que l'heure de début de la première durée de conversion d'état de puissance d'émission du signal de référence de sondage est antérieure à l'heure de début du symbole utilisé pour transmettre le signal de référence de sondage et l'heure de fin de la première durée de conversion d'état de puissance d'émission du signal de référence de sondage est postérieure à l'heure de début du symbole utilisé pour transmettre le signal de référence de sondage.

8. Procédé selon la revendication 2, dans lequel dans le cas où la première condition prédéterminée est que la priorité de transmission du premier signal correspondant au premier type de trafic supporté par le terminal est supérieure à la priorité de transmission du second signal correspondant au second type de trafic supporté par le terminal ou que le premier signal a besoin d'occuper la ressource de domaine temps-fréquence utilisée pour transmettre le second signal, la seconde condition prédéterminée comprend au moins l'un des éléments suivants :
une position de la ressource de domaine temporel utilisée pour transmettre le premier signal est adjacente à une position de la ressource de domaine temporel utilisée pour transmettre le second signal et la position de la ressource de domaine temporel utilisée pour transmettre le second signal est antérieure à la position de la ressource de domaine temporel utilisée pour transmettre le premier signal ;
la position de la ressource de domaine temporel utilisée pour transmettre le premier signal est adjacente à la position de la ressource de domaine temporel utilisée pour transmettre le second signal et la position de la ressource de domaine temporel utilisée pour transmettre le second signal est postérieure à la position de la ressource de domaine temporel utilisée pour transmettre le premier signal ;
la position de la ressource de domaine temporel utilisée pour transmettre le premier signal chevauche la position de la ressource de domaine temporel utilisée pour transmettre le second signal et une position d'une ressource de domaine temporel utilisée pour transmettre uniquement le second signal est antérieure à une position d'une ressource de domaine temporel utilisée pour transmettre à la fois le premier signal et le second signal ; et
la position de la ressource de domaine temporel utilisée pour transmettre le premier signal chevauche la position de la ressource de domaine temporel utilisée pour transmettre le second signal et la position de la ressource de domaine temporel utilisée pour transmettre uniquement le second signal est postérieure à la position de la ressource de domaine temporel utilisée pour transmettre à la fois le premier signal et le second signal.

9. Procédé selon la revendication 8, comprenant au moins l'un des éléments suivants :
dans le cas où la seconde condition prédéterminée comprend le fait que la position de la ressource de domaine temporel utilisée pour transmettre le premier signal est adjacente à la position de la ressource de domaine temporel utilisée pour transmettre le second signal et la position de la ressource de domaine temporel utilisée pour transmettre le second signal est antérieure à la position de la ressource de domaine temporel utilisée pour transmettre le premier signal, le modèle temporel du premier signal comprend le fait que l'heure de fin d'une première durée de conversion d'état de puissance d'émission du premier signal est antérieure à une position de départ d'un symbole utilisé pour transmettre le premier signal ;
dans le cas où la seconde condition prédéterminée comprend le fait que la position de la ressource de domaine temporel utilisée pour transmettre le premier signal est adjacente à la position de la ressource de domaine temporel utilisée pour transmettre le second signal et la position de la ressource de domaine temporel utilisée pour transmettre le second signal est postérieure à la position de la ressource de domaine temporel utilisée pour transmettre le premier signal, le modèle temporel du premier signal comprend le fait que l'heure de début d'une seconde durée de conversion d'état de puissance d'émission du premier signal est postérieure à une position de fin du symbole utilisé pour transmettre le premier signal ;
dans le cas où la seconde condition prédéterminée comprend le fait que la position de la ressource de domaine temporel utilisée pour transmettre le premier signal chevauche la position de la ressource de domaine temporel utilisée pour transmettre le second signal et la position de la ressource de domaine temporel utilisée pour transmettre uniquement le second signal est antérieure à la position de la ressource de domaine temporel utilisée pour transmettre à la fois le premier signal et le second signal, le modèle temporel du premier signal comprend le fait que l'heure de fin de la première durée de conversion d'état de puissance d'émission du premier signal est antérieure à une position de départ d'un symbole utilisé pour transmettre à la fois le premier signal et le second signal ; et
dans le cas où la seconde condition prédéterminée comprend le fait que la position de la ressource de domaine temporel utilisée pour transmettre le premier signal chevauche la position de la ressource de domaine temporel utilisée pour transmettre le second signal et la position de la ressource de domaine temporel utilisée pour transmettre uniquement le second signal est postérieure à la position de la ressource de domaine temporel utilisée pour transmettre à la fois le premier et le second signal, le modèle temporel du premier signal comprend le fait que l'heure de début d'une seconde durée de conversion d'état de puissance d'émission du premier signal est postérieure à une position de fin d'un symbole chevauché utilisé pour transmettre à la fois le premier signal et le second signal,
dans lequel la première durée de conversion d'état de puissance d'émission du premier signal est une durée de conversion de l'état de puissance d'émission désactivée du premier signal à l'état de puissance d'émission activée du premier signal ou une durée de conversion, dans l'état de puissance d'émission activée du premier signal, d'une première puissance d'émission du premier signal à une deuxième puissance d'émission du premier signal ; et
dans lequel la seconde durée de conversion d'état de puissance d'émission du premier signal est une durée de conversion de l'état de puissance d'émission activée du premier signal à l'état de puissance d'émission désactivée du premier signal ou une durée de conversion, dans l'état de puissance d'émission activée du premier signal, d'une troisième puissance d'émission du premier signal à une quatrième puissance d'émission du premier signal.

10. Procédé selon la revendication 8, comprenant au moins l'un des éléments suivants :
dans le cas où la seconde condition prédéterminée comprend le fait que la position de la ressource de domaine temporel utilisée pour transmettre le premier signal est adjacente à la position de la ressource de domaine temporel utilisée pour transmettre le second signal et la position de la ressource de domaine temporel utilisée pour transmettre le second signal est antérieure à la position de la ressource de domaine temporel utilisée pour transmettre le premier signal, le modèle temporel du second signal comprend le fait que l'heure de fin d'une seconde durée de conversion d'état de puissance d'émission du second signal est antérieure à une position de fin d'un symbole utilisé pour transmettre le second signal ;
dans le cas où la seconde condition prédéterminée comprend le fait que la position de la ressource de domaine temporel utilisée pour transmettre le premier signal est adjacente à la position de la ressource de domaine temporel utilisée pour transmettre le second signal et la position de la ressource de domaine temporel utilisée pour transmettre le second signal est postérieure à la position de la ressource de domaine temporel utilisée pour transmettre le premier signal, le modèle temporel du second signal comprend le fait que l'heure de début d'une première durée de conversion d'état de puissance d'émission du second signal est postérieure à une position de départ du symbole utilisé pour transmettre le second signal ;
dans le cas où la seconde condition prédéterminée comprend le fait que la position de la ressource de domaine temporel utilisée pour transmettre le premier signal chevauche la position de la ressource de domaine temporel utilisée pour transmettre le second signal et la position de la ressource de domaine temporel utilisée pour transmettre uniquement le second signal est antérieure à la position de la ressource de domaine temporel utilisée pour transmettre à la fois le premier signal et le second signal, le modèle temporel du second signal comprend le fait que l'heure de fin de la seconde durée de conversion d'état de puissance d'émission du second signal est antérieure à une position de départ d'un symbole utilisé pour transmettre à la fois le premier signal et le second signal ; et
dans le cas où la seconde condition prédéterminée comprend le fait que la position de la ressource de domaine temporel utilisée pour transmettre le premier signal chevauche la position de la ressource de domaine temporel utilisée pour transmettre le second signal et la position de la ressource de domaine temporel utilisée pour transmettre uniquement le second signal est postérieure à la position de la ressource de domaine temporel utilisée pour transmettre à la fois le premier et le second signal, le modèle temporel du second signal comprend le fait que l'heure de début de la première durée de conversion d'état de puissance d'émission du second signal est postérieure à une position de fin du symbole utilisé pour transmettre à la fois le premier signal et le second signal,
dans lequel la première durée de conversion d'état de puissance d'émission du second signal est une durée de conversion de l'état de puissance d'émission désactivée du second signal à l'état de puissance d'émission activée du second signal ou une durée de conversion, dans l'état de puissance d'émission activée du second signal, d'une première puissance d'émission du second signal à une deuxième puissance d'émission du second signal ; et
dans lequel la seconde durée de conversion d'état de puissance d'émission du second signal est une durée de conversion de l'état de puissance d'émission activée du second signal à l'état de puissance d'émission désactivée du second signal ou une durée de conversion, dans l'état de puissance d'émission activée du second signal, d'une troisième puissance d'émission du second signal à une quatrième puissance d'émission du second signal.

11. Procédé selon l'une quelconque des revendications 2 à 10, dans lequel la première condition prédéterminée est acquise via un dispositif côté réseau ; et
dans lequel la seconde condition prédéterminée est acquise via un dispositif côté réseau ou via une mesure du terminal.

12. Processeur (42), qui est configuré pour exécuter un programme, dans lequel lorsque le programme est exécuté, le procédé selon l'une quelconque des revendications 1 à 11 est mis en oeuvre.

13. Terminal, comprenant :
un processeur (42) selon la revendication 12 ; et
une mémoire (44), qui est couplée au processeur (42).

14. Support de stockage, comprenant un programme stocké, dans lequel lorsque le programme est exécuté, un dispositif dans lequel se trouve le support de stockage est commandé de sorte à mettre en oeuvre le procédé selon l'une quelconque des revendications 1 à 11.
